(19) Europäisches Patentamt
European Patent Office
Office européen des brevets

(11) EP 2 570 461 B1

(12) **EUROPEAN PATENT SPECIFICATION**

(45) Date of publication and mention of the grant of the patent:
**01.06.2016 Bulletin 2016/22**

(51) Int Cl.:
***C09D 7/00*** *(2006.01)* ***C09D 11/322*** *(2014.01)*
***C09D 11/326*** *(2014.01)*

(21) Application number: **12184273.6**

(22) Date of filing: **13.09.2012**

(54) **Ink for inkjet recording, inkjet recording method, inkjet recording device, and ink recording material**

Tinte zur Tintenstrahlaufzeichnung, Tintenstrahlaufzeichnungsverfahren, Tintenstrahlaufzeichnungsvorrichtung und Tintenstrahlaufzeichnungsmaterial

Encre pour enregistrement à jet d'encre, procédé d'enregistrement à jet d'encre, dispositif d'enregistrement à jet d'encre et matériau d'enregistrement à jet d'encre

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.09.2011 JP 2011199413**
**31.08.2012 JP 2012190905**

(43) Date of publication of application:
**20.03.2013 Bulletin 2013/12**

(73) Proprietor: **Ricoh Company, Ltd.**
**Tokyo 143-8555 (JP)**

(72) Inventors:
- **Fuji, Hidetoshi**
**Tokyo, 143-8555 (JP)**
- **Gotou, Hiroshi**
**Tokyo, 143-8555 (JP)**

(74) Representative: **Lamb, Martin John Carstairs**
**Marks & Clerk LLP**
**90 Long Acre**
**London WC2E 9RA (GB)**

(56) References cited:
**JP-A- 2011 068 838** **US-A- 5 580 373**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

BACKGROUND OF THE INVENTION

Field of the Invention

The present invention relates to ink for inkjet recording, an inkjet recording method, an inkjet recording device, and an inkjet recording material.

Description the Background Art

Inkjet recording methods are advantageous in comparison with other recording methods in that, since the process is simple, full colorization is easy and high-definition images can be obtained with even a simple apparatus configuration.

Dye-based ink in which various hydrosoluble dyes are dissolved in water or a mixture of water and an organic solvent is used as the ink for such inkjet recording.

In recent years, demand for high-speed printing has continued to increase. However, problems such as curling and cockling occur after printing in a case in which aqueous ink is used for plain paper. Aqueous ink contains large amounts of water, which swells the fiber of the paper and results in curling and cockling.

On the other hand, with oil-based ink, since it does not contain water, curling or cockling are not problems.

However, the oil-based ink penetrates into a recording medium more deeply than aqueous ink, which degrades the image quality such that image density is low and blurring and strike-through significantly occur. In short, ink for inkjet recording satisfies the competing requirements of minimal curling or cockling and superior image quality has not been attained so far.

Japanese Patent Application Publication Nos. H04-332775 (JP-H04-332775-A), JP-H06-157955-A, JP-H06-240189-A, JP-H09-176538-A, and JP-H10-130550-A describe methods of addition of a particular sugar group, sugar alcohol, amide compound as a anti-curling agent to prevent curling and cockling of plain paper when aqueous ink is used. Although successful in some degree, these methods still face the problems of curling and cockling when printing images requiring a large amount of ink at a high speed.

In particular, addition of an amide compound having a nitrogen-containing heterocyclic structure is suitable to decrease the viscosity of ink in addition to reduction of curling and cockling but to the contrary worsens curling and cockling when a recording medium having an agglomeration effect of a pigment at the surface thereof is used.

JP-2005-297549-A and JP-2006-321876-A describe methods of increasing the amount of solvent in aqueous ink to prevent occurrence of curling and cockling. However, since the ratio of the solvent increases, as in the case of the oil-based ink, the image quality is low and the viscosity of the ink tends to increase, which causes a problem with regard to ink discharge reliability.

JP-2007-091905 describes a method of increasing the amount of hydrophobic solvent to prevent occurrence of curling and cockling. However, the blending ratio is unclear and the results are unsatisfactory.

Currently, prevention of curling and cockling and improved image quality are a trade-off between competing, mutually exclusive goals.

SUMMARY OF THE INVENTION

In view of the foregoing, the present invention provides an improved ink for inkjet recording that includes water, a hydrosoluble organic solvent, a surface active agent, a coloring agent, and at least one of the group consisting of a hydrosoluble resin, a resin emulsion, and a resin coated pigment, wherein the content ratio of the hydrosoluble organic solvent in the ink with respect to the ink as a whole is from 40 % by weight to less than 50 % by weight, wherein the hydrosoluble organic solvent contains a component A, a component B, and a component C, wherein the content ratio of the component represented by the following Chemical Structure 1 as the component A relative to the ink is from 5 % by weight to less than 10 % by weight relative to the ink, wherein the content ratio of a component represented by the following Chemical Structure 2 as the component B relative to the ink is from 5 % by weight to less than 30 % by weight relative to the ink, and wherein the content ratio of a hydrosoluble organic solvent having an equilibrium moisture content of 20 % by weight or less at 23°C and 80 % RH as the component C relative to the ink is from 10 % by weight to less than 30 % by weight relative to the ink:

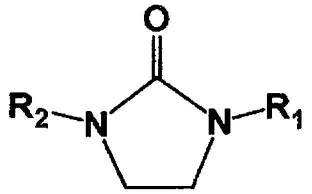

Chemical Structure 1

where $R_1$ and $R_2$ independently represent hydrogen atoms or alkyl groups having one to two carbon atoms,

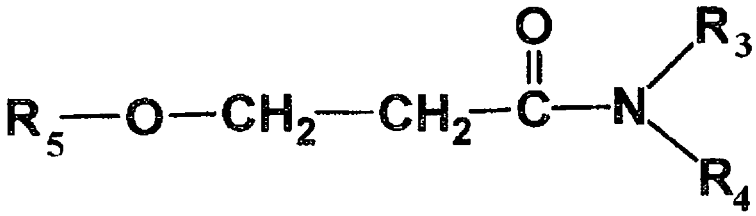

Chemical Structure 2

where $R_3$ and $R_4$ independently represent methyl groups and $R_5$ represents an alkyl group having two to five carbon atoms.

As another aspect of the present invention, an inkjet recording method is provided that includes applying a stimulus to the ink for inkjet recording mentioned above to discharge the ink onto a recording medium to form an image thereon..

As another aspect of the present invention, an inkjet recording device is provided that contains an inkjet discharging device that discharges the ink for inkjet recording mentioned above to a recording medium by applying a stimulus to the ink to form an image on the recording medium.

As another aspect of the present invention, an ink recording material is provided that has a recording medium and an image formed thereon by discharging the ink for inkjet recording mentioned above thereonto.

BRIEF DESCRIPTION OF THE SEVERAL VIEWS OF THE DRAWINGS

Various other objects, features and attendant advantages of the present invention will be more fully appreciated as the same becomes better understood from the detailed description when considered in connection with the accompanying drawings in which like reference characters designate like corresponding parts throughout and wherein:

Fig. 1 is a perspective view illustrating the appearance of an example of an inkjet recording device related to the present disclosure;
Fig. 2 is a diagram illustrating the configuration of the inkjet recording device illustrated in Fig. 1; and
Fig. 3 is a diagram illustrating part of the configuration of the inkjet recording device illustrated in Fig. 1.

DETAILED DESCRIPTION OF THE PRESENT DISCLOSURE

Ink for Inkjet Recording

The ink for inkjet recording of the present disclosure contains water, a hydrosoluble organic solvent (wetting agent), a surface active agent, a coloring agent, and at least one kind of a hydrosoluble resin, a resin emulsion, and resin-coated pigments. In addition, optionally, a permeating (penetrating) agent and other components can be contained.

Hydrosoluble Organic Solvent

The ink for inkjet recording of the present disclosure contains a hydrosoluble organic solvent in an amount of from 40 % by weight to less than 50 % by weight with respect to the ink as a whole. In addition, the hydrosoluble organic solvent contains a component A, a component B, and a component C.

The component A contains a compound represented by the following Chemical Structure 1 in an amount of from 5 % by weight to less than 10 % by weight relative to the ink. The component B contains a compound represented by the following Chemical Structure 2 in an amount of from 5 % by weight to less than 30 % by weight relative to the

ink. The compound C contains a hydrosoluble organic solvent having an equilibrium moisture content of 20 % by weight or less at 23 °C and 80 % RH in an amount of from 10 % by weight to less than 30 % by weight relative to the ink.

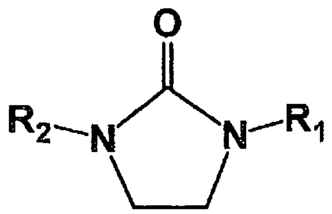

Chemical Structure 1

In the Chemical Structure 1, $R_1$ and $R_2$ independently represent hydrogen atoms or alkyl groups having one to two carbon atoms.

Specific examples of the compound represented by the Chemical Structure 1 include, but are not limited to, 1,3-dimethyl-2-imidazolidinone and 1,3-diethyl-2- imidazolidinone. The compound represented by the Chemical Structure 1 has a high moisture-retaining property and improves the discharging reliability. In addition, by adding a nitrogen-containing heterocylcic compound to the ink, the viscosity of the ink is expected to be low in comparison with the amount of the solvent. As described above, the ink contains the compound represented by the Chemical Structure 1 in an amount of from 5 % by weight to less than 10% by weight, preferably from 5 % by weight to 8 % by weight, and more preferably from 5 % by weight to 6 % by weight.

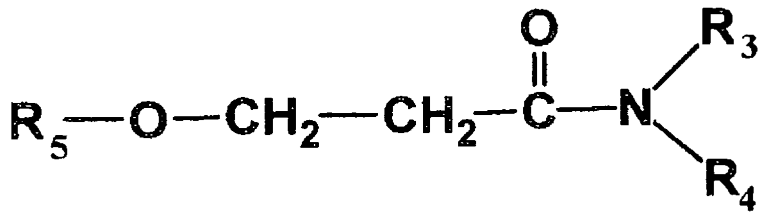

Chemical Structure 2

In the Chemical Structure 2, $R_3$ and $R_4$ independently represent methyl groups and $R_5$ represents an alkyl group having two to five carbon atoms.

The compound represented by the Chemical Structure 2 is a β-alkoxy-propion amide. Among these, β-buthoxy-N,N-dimethylpropion amide and β-methoxy-N,N-dimethylpropion amide are preferable. These compounds are obtained by, for example, reacting an amide acrylate and an aliphatic mono-alcohol having one to four carbon atoms as raw materials.

Specific examples of the amide acylate, which is a raw material of β-alkoxy-propion amides represented by the Chemical Structure 2 include, but are not limited to, acrylamide, N-methyl acrylamide, N,N-dimethyl acrylamide, N-ethyl acrylamide, N,N-diethyl acrylamide, N-propyl acrylamide, N,N-dipropyl acrylamide, N-butyl acrylamide, N,N-dibutyl acrylamide, 1-acryloyl pyrrolidine, 1-acryloyl piperidine, and 4-acryloyl morpholine. Among these, acrylamide, N-methyl acrylamide, N,N-dimethyl acrylamide, N-ethyl acrylamide, N,N-diethyl acrylamide, and 4-acryloyl morpholine are preferable.

The other raw material of β-alkoxy-propion amide is an aliphatic mono-alcohol having one to four carbon atoms (hereinafter also referred to as the lower mono-alcohol). This lower mono-alcohol has a straight chain or a branched chain structure and specific examples thereof include, but are not limited to, methanol, ethanol. n-propanol, and n-butanol. Among these, butanol is particularly preferable.

The reaction between the amide acrylate and the aliphatic mono-alcohol having one to four carbon atoms are preferably conducted by base catalysis. The reaction condition is suitably selected according to the kinds of used materials and catalyst but the reaction temperature is normally selected from the range of from 10 °C to 100 °C.

When methanol is used as the lower mono-alcohol and an alkoxido of an alkali metal is used as the base catalyst, the reaction temperature is preferably selected from the range of from 10°C to 50 °C, more preferably from 10 °C to 40 °C, and furthermore preferably from 25 °C to 40 °C. The yield ratio tends to decrease at excessively high temperatures and the reaction speed tends to become too slow, which is not practical.

In addition, with regard to the reaction pressure, the reaction easily proceeds at normal pressure, which is advantageous in terms of economy. The reaction time depends on the kinds of the used materials and catalyst and the reaction temperature and cannot be simply concluded but is typically one to ten hours and preferably two to five hours.

Since the compound represented by the Chemical Structure 2 is inferior to the compound represented by the Chemical Structure 1 with regard to the lower moisture-retaining property, it assists the solution of the low soluble components in the ink and also swells the resin for use in the pigment, dispersing element, etc. in the ink.

As described above, the ink contains the compound represented by the Chemical Structure 2 in an amount of from 5 % by weight to less than 30 % by weight, preferably from 7 % by weight to 25 % by weight, and more preferably from 9 % by weight to 20 % by weight.

The mechanism of occurrence of curling is that when ink that contains moisture is attached to the surface of a recording medium, the ink swells the gap between cellulose fibers, thereby curling the recording medium backward against the printed surface (backward curling) due to the stretching ratio difference of the top layer and the bottom layer of the recording medium.

When a recording medium having a surface on which pigments are agglomerated to improve the image density or such treatment is used, pigment particles accumulate a lot on the surface of the recording medium.

At this point, if a nitrogen-containing heterocyclic compound such as the compound represented by the Chemical Structure 1 is added, the compound stays a lot on the surface of the recording medium because it has a high moisture-retaining property and swells the pigment and the resin component in the ink, which causes the difference between the moisture amount in the top layer and the bottom layer on the recording medium, resulting in curling (backward curling).

With regard to this problem, as a result of investigations by the present inventors, it is found that a combinational use of the compound represented by the Chemical Structure 1 and the compound represented by the Chemical Structure 2 reduces the difference of the moisture between the top layer and the bottom layer of a recording medium even when pigment particles accumulate on the surface of the recording medium because the compound represented by the Chemical Structure 2 selectively swells the resin.

In the present disclosure, the hydrosoluble organic solvent having an equilibrium moisture content of 20 % by weight or less at 23 °C and 80 % RH represents an hydrosoluble organic solvent having an equilibrium moisture of 20 % by weight or less, preferably 15 % by weight or more, in an environment of 23 °C and 80 % RH.

A combinational use of such a hydrosoluble organic solvent and the compound represented by the Chemical Structure 1 is suitable to reduce occurrence of curling and cockling. As described above, the hydrosoluble organic solvent having an equilibrium moisture of 20 % by weight or less at 23 °C and 80 % RH is contained in the ink in an amount of from 10 % by weight to less than 30 % by weight and preferably from 10 % by weight to less than 15 % by weight.

The equilibrium moisture content of the hydrosoluble organic solvent represents the amount of water therein obtained when a mixture of the hydrosoluble organic solvent and water are released into air at a constant temperature and humidity and the evaporation of the water in the solvent and the absorption of the water in air are in an equilibrium condition. To be specific, the equilibrium moisture content can be obtained as follows: while keeping the temperature and the humidity in a desiccator using a saturated potassium chloride solution at 22 °C to 24 °C and 77 % to 83 %, a petri dish on which 1 g of each hydrosoluble organic solvent is placed is preserved in the desiccator until no mass change occurs followed by calculation based on the following relationship.

$$\text{Equilibrium moisture content (\%)} = \{\text{Moisture amount absorbed in organic solvent} / (\text{Content of organic solvent} + \text{Moisture amount absorbed in organic solvent})\} \times 100$$

Relationship 1

In the present disclosure, specific examples of the hydrosoluble organic solvent having an equilibrium moisture content of 20 % by weight or less at 23 °C and 80 % RH include, but are not limited to, polyols, polyol alkyl ethers. polyol aryl ethers, nitrogen-containing heterocyclic compounds, amides, amines, sulfur-containing compounds, propylene carbonates, and ethylene carbonates. To be specific, these are: isobutyl diglycol (boiling point: 220 °C, 10 % by weight), tripropylene glycol monomethyl ether (boiling point: 242 °C, 13 % by weight), 2-(2-isopropyloxyethoxy) ethanol (boiling point: 207 °C, 18 % by weight), isopropyl glycol (boiling point: 142 °C, 15 % by weight), diethyl diglycol (boiling point: 189 °C, 10 % by weight), propyl propylene glycol (boiling point: 150 °C, 17 % by weight), tributyl citrate (boiling point: 234 °C, 4 % by weight), propyl propylene diglycol (boiling point: 220 °C, 5% by weight), butyl propylene glycol (boiling point: 170°C, 6 % by weight), butyl propylene diglycol (boiling point: 212 °C, 3 % by weight), methyl propylene glycol acetate (boiling point: 146 °C, 8 % by weight), and triethylene glycol dimethyl ether (boiling point: 216°C, 20 % by weight).

A combinational use of such a hydrosoluble organic solvent and the compound represented by the Chemical Structure 1 is suitable to reduce the difference in the moisture amount between the top layer and the bottom layer of a recording medium even when pigment particles accumulate on the surface of the recording medium.

Other specific examples of the hydrosoluble organic solvents include, but are not limited to, 1,2,3-butane triol (boiling point: 175°C/33 hPa, 38 % by weight), 1,2,4-butane triol (boiling point: 190 °C to 191 °C / 24 hPa, 41 % by weight), glycerine (boiling point: 290 °C, 49 % by weight), diglycerine (boiling point: 270°C / 20 hPa, 38 % by weight),

triethylene glycol (boiling point: 285 °C, 39 % by weight), tetraethylene glycol (boiling point: 324°C to 330 °C, 37 % by weight), diethylene glycol (boiling point: 245°C, 43 % by weight), 1,3-butane diol (boiling point: 203°C to 204 °C, 35 % by weight), and 3-methyl-1,3-butane diol (boiling point: 203 °C, 23 % by weight). Among these, glycerine and 1,3-butane diol are particularly suitably used in terms of reducing the viscosity when water is contained.

The following can be also used as the organic solvent.

Dipropylene glycol (boiling point: 232°C), 1,5-pentane diol (boiling point: 242 °C), propylene glycol (boiling point: 187 °C), 2-methyl-2,4-pentane diol (boiling point: 197 °C), ethylene glycol (boiling point: 196 °C to 198 °C), tripropylene glycol (boiling point: 267°C), hexylene glycol (boiling point: 197°C), polyethylene glycol (viscostic liquid to solid), polypropylene glycol (boiling point: 187 °C), 1,6-hexane diol (boiling point: 253 °C to 260 °C), 1,2,6-hexane triol (boiling point: 178 °C), trimethylol ethane (solid; melting point: 199 °C to 201 °C), and trimethylol propane (solid; melting point: 61 °C).

Specific examples of the polyol alkyl ethers include, but are not limited to, ethylene glycol monoethyl ether (boiling point: 135 °C), ethylene glycol monobutyl ether (boiling point: 171 °C), diethylene glycol monomethyl ether (boiling point: 194 °C), diethylene glycol monoethyl ether (boiling point: 197 °C), diethylene glycol monobutyl ether (boiling point: 231 °C), ethylene glycol mono-2-ethylhexyl ether (boiling point: 229 °C), and propylene glycol monoethyl ether (boiling point: 132°C). Specific examples of the polyol aryl ethers include, but are not limited to, ethylene glycol monophenyl ether (boiling point: 237 °C) and ethylene glycol monobenzyl ether.

Specific examples of the nitrogen-containing heterocyclic compounds include, but are not limited to, 2-pyrolidone (boiling point: 250 °C, melting point: 25.5 °C, 47 % by weight to 48 % by weight), N--methyl-2-pyrolidone (boiling point: 202 °C), 1,3-dimethyl-2-imidazolidinone (boiling point: 226 °C), ε-caprolactam (boiling point: 270 °C), and γ-butylolactone (boiling point: 204 °C to 205 °C).

Specific examples of the amides include, but are not limited to, formamide (boiling point: 210 °C), N-methyl formamide (boiling point: 199 °C to 201 °C), N,N-dimethylformamide (boiling point: 153 °C), and N,N-diethylformamide (boiling point: 176 °C to 177 °C).

Specific examples of the amines include, but are not limited to, monoethanol amine (boiling point: 170 °C), diethanol amine (boiling point: 268 °C), triethanol amine (boiling point: 360 °C), N,N-dimethyl monoethanol amine (boiling point: 139 °C), N-methyl diethanol amine (boiling point: 243 °C), N-methylethanol amine (boiling point: 159 °C), N-phenyl ethanol amine (boiling point: 282 °C to 287 °C), and 3-aminopropyl diethyl amine (boiling point: 169 °C).
Specific examples of the sulfur-containing compounds include, but are not limited to, dimethyl sulphoxide (boiling point: 139°C), sulfolane (boiling point: 285 °C), and thiodiglycol (boiling point: 282 °C).

Sugar groups are also preferable as other solid hydrosoluble organic solvents.

Specific examples of the sugar groups include, but are not limited to, monosaccharides, disaccharides, oligosaccharides (including trisaccharides and tetrasaccharides), and polysaccharides. Specific examples thereof include, but are not limited to, glucose, mannose, fructose, ribose, xylose, arabinose, galactose, maltose, cellobiose, lactose, saccharose, trehalose, and maltotriose. Polysaccharides represent sugar in a broad sense and are materials that are present widely in nature, for example, α-cyclodextrine and cellulose. In addition, specific examples of derivatives of these sugar groups include, but are not limited to, reducing sugars (for example, sugar alcohols (represented by $HOCH_2(CHOH)_nCH_2OH$, where n represents an integer of from 2 to 5) of the sugar groups specified above, oxidized sugars (e.g., aldonic acid and uronic acid), amino acid, and thio acid. Among these, sugar alcohols are preferable and specific examples thereof include, but are not limited to, maltitol and sorbit.
The content of the ink of the hydrosoluble organic solvent is preferably from 40 % by weight to less than 50 % by weight in terms of the prevention effect of curling and the image quality.

Coloring Agent

As for the coloring agent, dyes and pigments can be used.

Specific examples of the pigments include, but are not limited to, organic pigments such as azo-based pigement, phthalocyanine-based pigments, anthraquinone-based pigments, dioxadine-based pigments, indigo-based pigments, thioindigo-based pigments, perylene-based pigments, isoindolenone-based pigments, aniline black, azomethine-based pigments, and Rhodamine B lake pigments and inorganic pigments such as carbon black, iron oxide, titanium oxide, calcium carbonate, barium sulfate, aluminum hydroxide, barium yellow, ferric hexacyanoferrate, cadmium red, chromium yellow, and metal powder,

Specific examples of the black pigments include, but are not limited to, carbon black (C.I. Pigment Black 7) such as furnace black, lamp black, acetylene black, and channel black, metals such as copper oxides, iron oxides (C.I. Pigment Black 11), and titanium oxides, and organic pigments such as aniline black (C.I. Pigment Black 1).

Specific examples of the yellow pigments include, but are not limited to, C.I. Pigment Yellow 1 (fast yellow G), 2, 3, 12 (disazo yellow AAA), 13, 14, 16, 17, 20, 23, 24, 34, 35, 37, 42 (yellow iron oxides), 53, 55, 73, 74, 75, 81, 83 (disazo yellow HR), 86, 93, 95, 97, 98 100, 101, 104, 108, 109, 110, 114, 117, 120, 125, 128, 129, 137, 138, 139, 147,

148, 150, 151, 153, 154, 155, 166, 168, 180, and 185.

Specific examples of the magenta pigments include, but are not limited to, C.I. Pigment Violet 19, C.I. Pigment Red 1, 2, 3, 5, 7,9, 12, 17, and 22 (brilliant fast scarlet), 23, 31, 38, 48:1 [permanent red 2B(Ba)], 48:2 [Permanent Red 2B (Ca)], 48:3 [Permanent Red 2B(Sr)], 48:4 [Permanent Red 2B(Mn)], 49:1, 52:2, 53:1, 57:1 (Brilliant Carmine 6B), 60:1, 63:1, 63:2, 64:1, 81 (Rhodamine 6G Lake), 83, 88, 92, 97, 101 (rouge), 104, 105, 106, 108 (cadmium red), 112, 114, 122 (dimethyl quinacridone), 123, 146, 149, 166, 168, 170, 172, 175, 176, 178, 179, 180, 184, 185, 190, 192, 193, 202, 209, 215, 216, 217, 219, 220, 223, 226, 227, 228, 238, 240, 254, 255, and 272.

Specific examples of the cyan pigments include, but are not limited to, C.I. Pigment Blue 1,2, 3, 15 (copper phthalocyanine blue R), 15:1, 15:2, 15:3 (copper phthalocyanine blue G), 15:4, 15:6 (phthalocyanine blue E), 16, 17:1, 22, 56, 60, 63, and 64, Pat blue 4, and Pat blue 60.

Specific examples of intermediate color pigments include, but are not limited to, C.I.Pigment Red 177, 194, and 224, C.I.Pigment Orange 16, 36, 43, 51, 55, 59, 61, and 71, C.I.Pigment Violet 3, 19, 23, 29, 30, 37, 40, and 50, and C.I.Pigment Green 7 and 36 for red, green and blue.

Among these pigments, as black pigments, carbon black is particularly preferable. It is suitable to use carbon black manufactured by a furnace method or a channel method which has a primary particle diameter of from 15 nm to 40 nm, a specific surface area of from 50 $m^2/g$ to 300 $m^2/g$ according to BET absorption method, a DPB absorption oil amount of from 40 ml/100g to 150 ml/100g, a volatile content of from 0.5 % to 10%, and a pH of from 2 to 9. Acid carbon black having a pH of 6 or less is particularly preferable because it is a high concentration.

As the color pigments, Pigment Yellow 13, 17, 55, 74, 93, 97, 98, 110, 128, 139, 147,150, 151, 154, 155, 180, and 185, Pigment Red 122, 202, and 209, Pigment Violet 19, Pigment Blue 15:3 and 15:4 are particularly preferable.

The pigments specified above are preferably selected from self-dispersible pigments (self dispersing pigments) in which a hydrophilic group is modified on the surface of the pigment or resin coated pigments. In the present disclosure, the resin coated pigments represent pigments in which resins are chemically bonded or physically absorbed on the surface of the pigment.

As the self dispersing pigments, pigments in which a hydrophilic group such as a carboxylic acid group, a sulfonic acid group, and an amino group modifies the surface directly or via another atomic group (such as a phenyl group) are preferable.

As the pigment coated by resins (resin coated pigments), it is preferable that the coating resin for the pigment coated by the resin is a water-insoluble vinyl polymer, which is formed by polymerizing a monomer mixture that contains: (A) a monomer represented by Chemical Structure 3, (B) a monomer containing a salt producing group, and (C) a hydrophobic monomer.

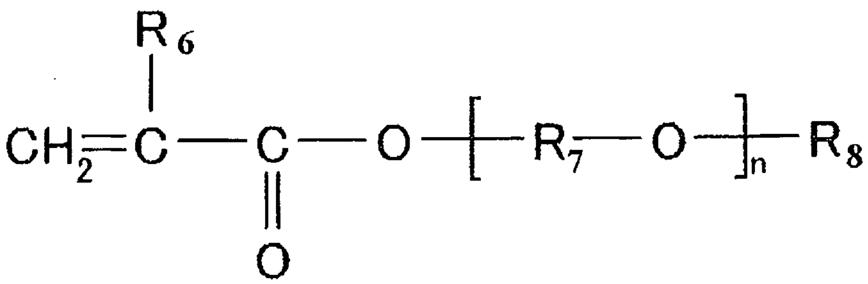

Chemical Structure 3

In the Chemical Structure 3, $R_6$ represents a hydrogen atom or a methyl group, $R_7$ represents an alkylene group having two to eight carbon atoms or an alkylene group having two to four carbon atoms in which a hydrogen atom is substituted by a phenyl group, n represents an integer of from 2 to 30, and $R_8$ represents a straight-chain or branch-chain alkyl group having 2 to 30 carbon atoms.

In this case, (C) the hydrophobic monomer preferably contains at least one of (C-1) a monomer represented by the Chemical Structure 4, (C-2) a monomer represented by the Chemical Structure 5, and (C-3) a macromer.

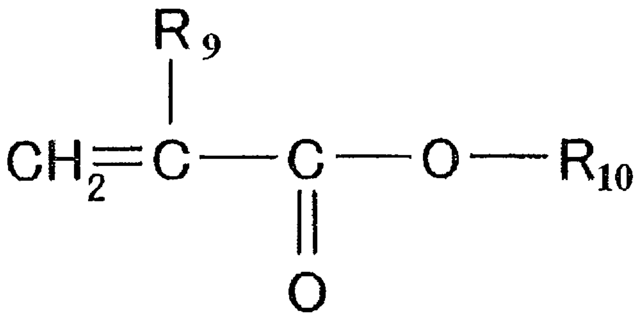

Chemical Structure 4

In the Chemical Structure 4, $R_9$ represents a hydrogen atom or a methyl group, $R_{10}$ represents an alkyl group having 1 to 22 carbon atoms, an aryl group having 6 to 22 carbon atoms, an alkyl aryl group, an aryl alkyl group, and a cyclic hydrocarbon group having 3 to 22 carbon atoms.

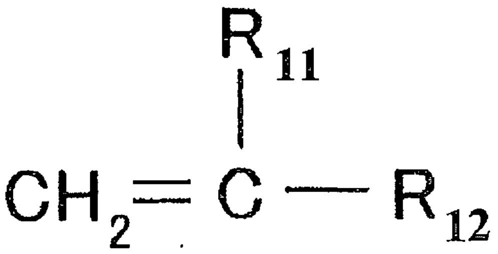

Chemical Structure 5

In the Chemical Structure 5, $R_{11}$ represents a hydrogen atom or a methyl group and $R_{12}$ represents a substituted or non-substituted phenyl group, a biphenyl group, or a naphthalene group.

In this case, it is preferable that the ink residual left until no mass change occurs substantially in an environment of a temperature of 25 °C and a humidity of 15 % has a viscosity of 3,000 mPa·s or less and the ink adjusted material adjusted to have a pH of 7 by an acid has a viscosity of 500 mPa·s or more.

There is no specific limit to the average particle diameter of the pigment. The average particle diameter is preferably from 20 nm to 200 nm, more preferably from 30 nm to 150 nm, and furthermore preferably from 50 nm to 100 nm. A pigment that has an excessively large average particle diameter tends to degrade the saturation of a printed image, cause agglomeration of the ink due to increased viscosity thereof during ink preservation, and clog the nozzle when printing images. A pigment that has an excessively small average particle diameter tends to degrade the light resistance and the preservation stability.

The average particle diameter of the pigment in the present disclosure is the 50 % average particle diameter (D50) obtained by measuring at 23 °C a sample prepared by dilution with a pure water such that the concentration of the pigment in the measuring sample is 0.01% by weight by using Microtrac UPA-150 (manufactured by Nikkiso Co., Ltd.) with a particle refraction ratio of 1.52, a particle density of 1.4 g / $cm^3$, and pure water parameters as the solvent parameter.

The concentration of the pigment in the ink is preferably from 2 % by weight to 15 % by weight, more preferably from 3 % by weight to 12 % by weight, and furthermore preferably from 4 % by weight to 10 % by weight. When the concentration of the pigment is too small, the coloring ability tends to be insufficient so that the vividness of the color of an image is inferior. When the concentration of the pigment is too large, the preservation stability of the ink tends to deteriorate and the image tends to become dull.

In general, a dispersant is used for the pigment ink. Non-ionic or anionic surface active agent-based dispersants are suitably selected depending on the kind of pigments or ink prescription.

Specific examples of the non-ionic surface active agents include, but are not limited to, polyoxyethylene alkyl ethers such as polyoxyethylene lauryl ether, polyoxyethylene myristyl ether, polyoxyethylene cetyl ether, polyoxyethylene stearyl ether, and polyoxyethylene oleyl ether; polyoxyethylene alkylphenyl ethers such as polyoxyethylene octyl phenyl ether and polyoxyethylene nonyl phenyl ether; polyoxyethylene-α-naphtyl ether, polyoxyethylene-β-naphtyl ether, polyoxyethylene monostyryl phenyl ether, polyoxyethylene distyryl phenyl ether, polyoxyethylene alkyl naphtyl ether, polyoxyethylene monostyryl naphtyl ether, polyoxyethylene distyryl naphtyl ether, and block copolymers of polyoxyethylene and polyoxy propylene. In addition, it is also possible to use surface active agents in which part of polyoxyethylene of these surface active agents specified above is substituted with polyoxy propylene or surface active agents formed by condensing a compound having an aromatic ring such as polyoxyethylene alkylphenylether with formalin, etc.

The hydrophile-lipophile balance (HLB) of the non-ionic surface active agent is preferably from 12 to 19.5 and more preferably from 13 to 19. When the HLB is too small, the compatibility of the surface active agent with the dispersion solvent is poor so that the dispersion stability tends to deteriorate. When the HLB is too large, the surface active agent tends not to be easily adsorbed to the pigment, thereby degrading the dispersion stability.

Specific examples of the anionic surface active agents include, but are not limited to, polyoxyethylene alkyl ether sulfates, polyoxyethylene alkyl phenyl ether sulfates, polyoxyethylene monostyryl phenylether sulfates, polyoxyethylene distyryl phenyl ether sulfates, polyoxyethylene alkyl ether phosphates, polyoxyethylene alkyl phenyl ether phosphates, polyoxyethylene monostyryl phenylether phosphates, polyoxyethylene distyryl phenyl ether phosphates, polyoxyethylene alkyl ether carbonates, polyoxyethylene alkyl phenylether carbonates, polyoxyethylene monostyryl phenylether carbonates, polyoxyethylene distyryl phenyl ether carbonates, naphtahlene sulfonate formalin condensed products, melanine sulfonate formalin condensed products, dialkyl sulfosuccinate ester salts, sulfosuccinate alkyl disalts, polyoxyethylene alkyl slfosuccinate disalts, alkyl sulfoacetate, $\alpha$-olefin sulfonates, alkyl benzene sulfonates, alkyl naphthalene sulfonates, alkyl sulfonates, N-acyl amino-acid salt, acylated peptide, and soap. Among these, sulfates or phosphates of polyoxyethylene alkyl ether, polyoxyethylene alkyl phenyl ether, and polyoxyethylene distyryl phenyl ether are particularly preferable.

The addition amount of the surface active agent-based dispersant is preferably from about 10 % by weight to 50 % by weight of the pigment. When the addition amount is too small, the preservation stability of the pigment dispersing element and the ink tends to deteriorate or the time to be taken for dispersion tends to be extremely long. When the addition amount is too large, the viscosity of the ink tends to become excessively high, thereby degrading the discharging stability.

With regard to the dye, among the dyes classified into acidic dyes, direct dyes, basic dyes, reactive dyes, and food dyes in the color index thereof, dyes having excellent water resistance and light resistance are used. These dyes can be mixed for use and other coloring agents such as pigments can be also mixed. However, the other coloring agents are required to be added within a suitable range.

Specific examples of the dyes include, but are not limited to the following (a) to (d):

(a) Acidic Dyes and Food Dyes

- C.I. Acid Yellow 17, 23, 42, 44, 79, and 142.
- C.I. Acid Red 1, 8, 13, 14, 18, 26, 27, 35, 37, 42, 52, 82, 87, 89, 92, 97, 106, 111, 114, 115, 134. 186, 249,254, and 289.
- C.I. Acid Blue 9, 29, 45, 92, and 249.
- C.I. Acid Black 1, 2, 7, 24, 26, and 94.
- C.I. Food Yellow 3 and 4.
- C.I. Food Red 7, 9, and 14.
- C.I. Food Black 1 and 2.

(b) Direct Dye

- C.I. Direct Yellow 1, 12, 24, 26, 33, 44, 50, 86, 120, 132, 142, and 144
- C.I. Direct Red 1, 4, 9, 13, 17, 20, 28, 31, 39, 80, 81, 83, 89, 225, and 227.
- C.I. Direct Orange 26, 29, 62, and 102
- C.I. Direct Blue 1, 2, 6, 15, 22, 25, 71, 76, 79, 86, 87, 90, 98, 163, 165, 199, and 202.
- C.I. Direct Black 19, 22, 32, 38, 51, 56, 71, 74, 75, 77, 154, 168, and 171.

(c) Basic Dye

- C.I. Basic Yellow 1, 2, 11, 13, 14, 15, 19, 21, 23, 24, 25, 28, 29, 32, 36, 40, 41, 45, 49, 51, 53, 63, 64, 65, 67, 70, 73, 77, 87, and 91.
- C.I. Basic Red 2, 12, 13, 14, 15, 18, 22, 23, 24, 27, 29, 35, 36, 38, 39, 46, 49, 51, 52, 54, 59, 68, 69, 70, 73, 78, 82, 102, 104, 109, and 112.
- C.I. Basic Blue 1, 3, 5, 7, 9, 21, 22, 26, 35, 41, 45, 47, 54, 62, 65, 66, 67, 69, 75, 77, 78, 89, 92, 93, 105, 117, 120, 122, 124, 129, 137, 141, 147, and 155.
- C.I. Basic Black 2 and 8

(d) Reactive Dye

- C.I. Reactive Black 3, 4, 7, 11, 12, and 17.

- C.I. Reactive Yellow 1, 5, 11, 13, 14, 20, 21, 22, 25, 40, 47, 51, 55, 65, and 67.
- C.I. Reactive Red 1, 14, 17, 25, 26, 32, 37, 44, 46, 55, 60, 66, 74, 79, 96, and 97.
- C.I. Reactive Blue 1, 2, 7, 14, 15, 23, 32, 35, 38, 41, 63, 80, and 95.

It is preferable to add a resin emulsion mainly to improve the abrasion resistance if images and the preservation stability when a pigment is used as the coloring agent. The resin emulsion represents resin particles (polymer particles) dispersed in water.

To improve the abrasion resistance of images, emulsions of acrylic resins, styrene and acrylic resins, acrylic silicone resins, and fluorine resins are preferable. To improve the preservation stability, emulsions of polyurethane resins, acrylic resins, styrene-acrylic resins are preferable.

However, since resins emulsions that improve the abrasion resistance of the image and the preservation stability at the same time are rare, it is good to use two kinds of resin emulsions in combination. Products available from the market can be used as these resins emulsions.

Specific examples of the resin emulsions are as follows:

(1) Urethane Resin Emulsion

The urethane resin of the urethane resin emulsion is formed by polymerizing polyisocyanates with polyether polyols, polyester polyyols, polylactone polyols, polycarbonate polyols, etc. Specific examples of the polyisocyanates include, but are not limited to, aliphatic series diisocyanat compouds such as hexamethylene diisocyanate and 2,2,4-trimethyl hexamethylene diisocyanate; alicyclic diisocyanate compounds such as isophorone diisocyanate, hydrogenerated xylilene diisocyanate, 1,4-cyclohexane diisocyanate, and 4,4'-dicyclohexyl methane diisocyanate; aromatic aliphatic diisocyanate compounds such as xylilene diisocyanates and tetramethyl xylilene diisocyanates; aromatic diisocyanate compounds such as toluylene diisocyanate and phenyl methane diisocyanate; and modified products of these diisocyanates (carbodiimides, uretdione, and uretonimine containing modified products).

As the polyether polyols, specific examples thereof include, but are not limited to, polyethylene glycol, polypropylene glycol, polytetramethylene ether glycol, and polyhexamethylene ether glycol.

As the polyester polyols, specific examples thereof include, but are not limited to, polyethylene adipate, polybutylene adipate, polynethopentyl adipate, poly-3- methyl pentyl adipate, polyethylene/butylene adipate, and polyneopentyl/hexyl adipate.

As the polylactone polyols, specific examples thereof include, but are not limited to, polycaprolacotone diols and poly-omega-hydroxy caproic acid polyols.

As the polycarbonate polyols, specific examples thereof include, but are not limited to, known products obtained from reaction between diols such as propane diol (1,3), butane diol (1,4), hexane diol-(1,6), diethylene glycol, triethylene glycol, and tetraethylene glycol, phosgene, and diaryl carbonates such as diphenyl carbonate or cyclic carbonates such as ethylene carbonate and propylene carbonate.

(2) Acrylic Resin Emulsion

The acrylic resins of the acrylic resin emulsions can be prepared by polymerizing an acrylic resin monomer singly or co-polymerizing with other monomers.
As the acrylic resin monomers, specific examples thereof include, but are not limited to, methyl acrylate, ethyl acrylate, n-propyl acrylate, isopropyl acrylate, n-butyl acrylate, isobutyl acrylate, t-butyl acrylate, n-pentyl acrylate, isopentyl acrylate, neopentyl acrylate, 3- (methyl)butyl acrylate, 2-ethylhexyl acrylate, hexyl acrylate, cyclohexyl acrylate, octyl acrylate, nonyl acrylate, decyl acrylate, undecyl acrylate, dodecyl acrylate, phenyl acrylate, methyl methacrylate, n-propyl methacrylate, isopropyl methacrylate, n-butyl methacrylate, isobutyl methacrylate, t-butyl methacrylate, n-pentyl methacrylate, isopentyl methacrylate, neopentyl methacrylate, 3-(methyl)butyl methacrylate, 2-ethyl hexyl methacrylate, hexyl methacrylate, octyl methacrylate, nonyl methacrylate, decyl methacrylate, undecyl methacrylate, dodecyl methacrylate, acrylic acid, methacylic acid, acrylamide, methacrylamide, acrylonitrile, and methacrylonitrile.

As the other monomers, specific examples thereof include, but are not limited to, vinvyl-based aromatic hydrocarbons such as styrene, o-methyl styrene, m-methyl styrene, p-methyl styrene, $\alpha$-methyl styrene, p-ethylstyrene, 2,4-dimethylstyrene, p-tert-butylstyrene, p-chlorostyrene, and divinyl benzene; unsaturated carboxylic acid such as itaconic acid and maleic acid; N-substituted maleimide, maleic anhydride, vinyl ketone, vinyl aetate, and vinylidene chloride.

The resin emulsion specified above exhibits excellent water-dispersibility all the more by introducing an ionic group into the resin. Specific examples of such inoic groups include, but are not limited to, a sulfphonic group, a carboxylic group, a sulfate group, a phosphoric group, a phosphonic group, and phosphine group, and alkali metal basic groups, alkali earth metal basic groups, ammonium basic groups, and primary to tertiary amine groups thereof. Among these, carboxylic alkali metal basic groups, a carboxylic ammonium basic group, sulphonic alkali metal basic groups, a sulphonic

ammonium basic group are preferable and in particular, sulphonic alkali metal basic groups and a sulphonic ammonium basic group are preferable in terms of the aqueous dispersion stability. The ionic group is introduced by adding a monomer having an ionic group when synthesizing a resin. Li, K, or Na salts are preferable as salts.

Hydrosoluble Resin

The hydrosoluble resins mentioned above have excellent film-forming (image forming) property, water repellency, water-resistance, and weather-resistance property. Therefore, these are suitable for image recording requiring excellent water-resistance and excellent image density (high coloring property).

Specific examples of the hydrosoluble resins include, but are not limited to, condensed synthesis resins such as polyester resins, polyurethane resins, polyepoxy resins, polyamide resins, polyether resins, poly(meth)acrylic resins, acrylic-silicone resins, and fluorine-containing resins.

Other specific examples of the hydrosoluble resins include, but are not limited to, the addition-based synthesis resins such as polyolefme resins, polystyrene resins, polyvinyl alcohol resins, polyvinyl ester resins, polyacrylic acid resins, and unsaturated carboxylic acid resins. Other specific examples of the hydrosoluble resins include, but are not limited to, natural polymer resins such as celluloses, rosins, and natural rubber. In addition, it is also possible to use resins formed by adding a hydrophilic group to these specified resins to be hydrosoluble.

Products available from the market can be used as the hydrosoluble resins. For example, POVAL and EXCEVAL (manufactured by Kuraray Co., Ltd.), and polyvinyl pyrolidone K-30W, polyvinyl pyrolidone K-85W, and polyvinyl pyrolidone K-90W (manufactured by Nippon Shokubai Co., Ltd.) can be suitably used.

Surface Active Agent

As the surface active agent, it is preferable to use a surface active agent that has a low surface tension, a high permeability, and a excellent leveling property without degrading the dispersion stability irrespective of the kind of the coloring agent and the combinational use with the wetting agent. At least a surface active agent selected from the group consisting of anionic surface active agents, nonionic surface active agents, silicone-containing surface active agents, and fluorine-containing surface active agents is preferable. Among these, silicone-containing surface active agents and fluorine-containing surface active agents are particularly preferred. These surface active agents may be used alone or in combination.

A fluorine-containing surface active agent in which the number of carbon atoms replaced with fluorine atoms is from 2 to 16 is preferable and, 4 to 16, more preferable. When the number of replaced carbon atoms with fluorine atoms is too small, the effect of fluorine atoms may not be demonstrated. When the number of replaced carbon atoms with fluorine atoms is too large, a problem may occur with regard to the ink preservability, etc.

Specific examples of the fluorine-containing surface active agents include, but are not limited to, perfluoroalkyl sulfonic acid compounds, perfluoroalkyl carboxylic acid compounds, perfluoroalkyl phosphoric acid ester compounds, adducts of perfluoroalkyl with ethylene oxide, and polyoxyalkylene ether polymer compounds having a perfluoroalkyl ether group in its side chain. Among these, polyoxyalkylene ether polymer compounds having a perfluoroalkyl ether group in its side chain are particularly preferable because of its low foaming property.

The fluorine-containing surface active agents represented by the following Chemical Structure 6 are more preferable.

$$CF_3CF_2(CF_2CF_2)_p - CH_2CH_2O(CH_2CH_2O)_qH \qquad \text{Chemical Structure 6}$$

In the Chemical Structure 6, a symbol "p" represents zero or an integer of from 1 to 10. A symbol "q" represents an integer of from 1 to 40.

Specific examples of the perfluoroalkyl sulfonic acid compounds include, but are not limited to, perfluoroalkyl sulfonic acid and salts of perfluoroalkylsulfonic acid.

Specific examples of the perfluoroalkyl carboxylic acid compounds include, but are not limited to, perfluoroalkyl carboxylic acid and salts of perfluoroalkyl carboxylic acid.

Specific examples of the perfluoroalkyl phosphoric acid ester compounds include, but are not limited to, perfluoroalkyl phosphoric acid esters and salts of perfluoroalkyl phosphoric acid esters.

Specific examples of the polyoxyalkylene ether polymer compounds having a perfluoroalkyl ether group in its side chain include, but are not limited to, a polyoxyalkylene ether polymer having a perfluoroalkyl ether group in its side chain, a sulfuric acid ester salt of polyoxyalkylene ether polymer having a perfluoroalkyl ether group in its side chain, and a salt of polyoxyalkylene ether polymer having a perfluoroalkyl ether group in its side chain. Counter ions of salts in these fluorine-based surface active agents are, for example, Li, Ha, K, $NH_4$, $NH_3CH_2CH_2OH$, $NH_2(CH_2CH_2OH)_2$, and $NH(CH_2CH_2OH)_3$.

Any suitably synthesized fluorine-containing surface active agents and products thereof available in the market can be also used as the fluorine-based surface active agents.

Specific examples of the products available from the market include, but are not limited to, Surflon S-111, Surflon S-112, Surflon S-113, Surflon S-121, Surflon S-131, Surflon S-132, Surflon S-141, and Surflon S-145 (all manufactured by ASAHI GLASS CO., LTD.); Fluorad FC-93, FC-95, FC-98, FC-129, FC-135, FC-170C, FC-430, and FC-431 (all manufactured by Sumitomo 3M); MegaFac F-470, F-1405, and F-474 (all manufactured by DIC Corporation); Zonyl TBS, FSP, FSA, FSN-100, FSN, FSO-100, FSO, FS-300 UR (all manufactured by Du Pont Kabushiki Kaisha); FT-110, FT-250, FT-251, FT-400S, FT-150 and FT-400SW (all manufactured by Neos Company Limited); and Polyfox PF-151N (manufactured by Omnova Solutions Inc.). Among these, in terms of improvement on the printing quality, in particular the color property and the uniform dying property on paper, FS-300 of Du Pont Kabushiki Kaisha, FT-110, FT-250, FT-251, FT-400S, FT-150, and FT-400SW of Neos Company Limited, and Polyfox PF-151N of Omnova Solutions Inc. are particularly preferred.

As the fluorine-containing surface active agents, the compound represented by the Chemical Structure 7 is preferable.

1. Anionic Fluorine-Containing Surface Active Agent

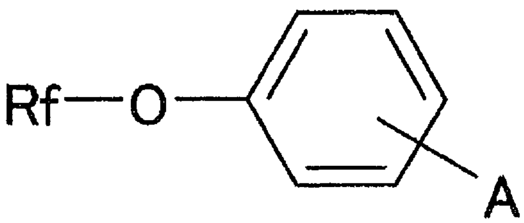

Chemical Structure 7

In the Chemical Structure 7, Rf represents a mixture of a fluorine-containing hydrophobic group represented by the Chemical Structure 7. A symbol "A" represents $-SO_3X$, $-COOX$, or $-PO_3X$, where X represents a counter cation. Specific examples of X include, but are not limited to, Li, Na, K, $NH_4$, $NH_3CH_2CH_2OH$, $NH_2(CH_2CH_2OH)_2$, and $NH(CH_2CH_2OH)_3$.

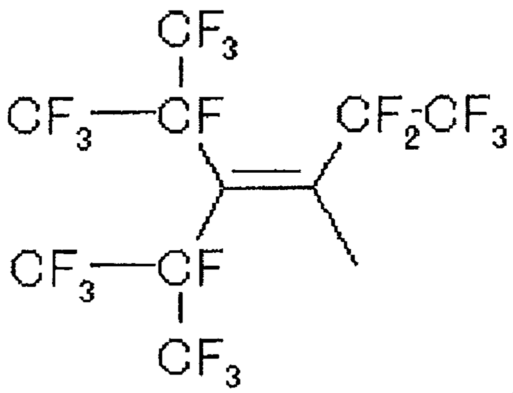

and

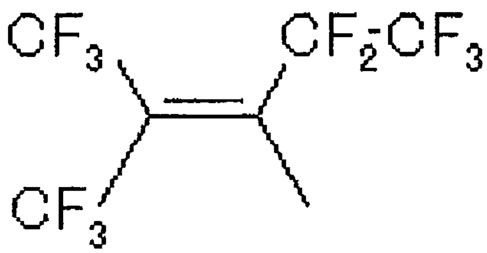

Chemical Structure 8

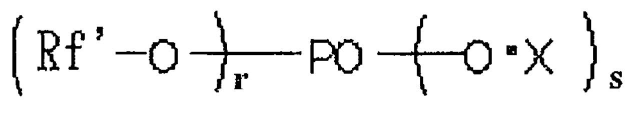

Chemical Structure 9

In the Chemical Structure 9, Rf' represents a fluorine-containing group represented by the Chemical Structure 10. X represents the same as above. A symbol "r" is 1 or 2 and a symbol "s" is (2 - n).

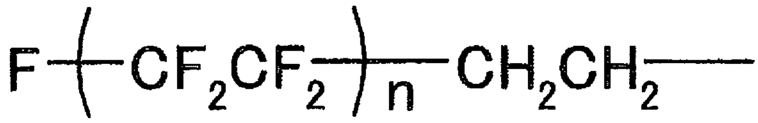

Chemical Structure 10

A symbol "n" represents an integer of from 3 to 10 in the Chemical Structure 10.

$Rf'-S-CH_2CH_2-COO\cdot X$ Chemical Structure 11

In the Chemical Structure 11, Rf and X are the same as above.

$Rf'-SO_3\cdot X$ Chemical Structure 12

In the Chemical Structure 12, Rf' and X are the same as above.

2. Nonionic Fluorine-Containing Surface Active Agent

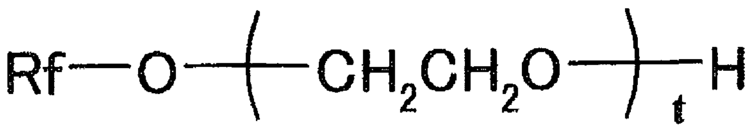

Chemical Structure 13

In the Chemical Structure 13, Rf is the same as above. A symbol "t" represents an integer of from 5 to 20.

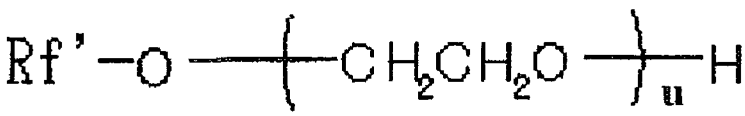

Chemical Structure 14

In the Chemical Structure 14, Rf is the same as above. A symbol "n" represents an integer of from 1 to 40.
Any suitably synthesized surface active agent and products thereof available in the market can be also used.
Products available in the market are easily obtained from Byk Chemie Japan Co., Ltd., Shin-Etsu Silicone Co., Ltd., Dow Corning Toray Co., Ltd., etc.
There is no specific limit to the polyether-modifed silicon-containing surface active agent. For example, a compound in which the polyalkylene oxide structure represented by the following Chemical Formula is introduced into the side chain of the Si portion of dimethyl polysilooxane is suitable.

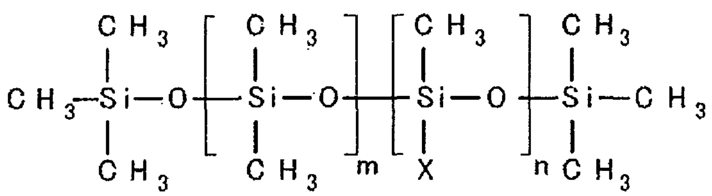

$X = -R(C_2H_4O)a(C_3H_6O)bR'$

Specific examples of the polyether-modified silicone-containing surface active agents include, but are not limited to, KF-618, KF-642, and KF-643 (manufactured by Shin-Etsu Chemical Co:, Ltd.).
Specific examples of the anionic surface active agents include, but are not limited to, polyoxyethylene alkyl ether acetates, dodecyl benzene sulfonates, laurates, and polyoxyethylene alkyl ether sulfates.
Specific examples of the nonionic surface active agents include, but are not limited to, polyoxyethylene alkyl

ether, polyoxypropylene polyoxyethylene alkyl ether, polyoxyethylene alkyl esters, polyoxy ethylene sorbitan aliphatic esters, polyoxyethylene alkyl phenyl ethers, polyoxyethylene alkyl amines, and polyoxyethylenealky amides.

The content of the surface active agents in the ink for inkjet recording is preferably from 0.01 % by weight to 3.0 % by weight and more preferably from 0.5 % by weight to 2 % by weight.

When the content is too small, the effect of the surface active agent tends to be weak. When the content is too large, penetration of the ink to a recording medium tends to become excessive, resulting in decrease in image density and occurrence of strike-through.

Penetrating Agent

The ink for inkjet recording for use in the present disclosure preferably has at least one kind of polyol compounds or glycol ether compounds having 8 to 11 carbon atoms. A penetrating agent having a solubility of from 0.2 % by weight to 50 % by weight in water at 25 °C is preferable. Among these, 2-ethyl-1,3-hexane diol (solubility: 4.2 % at 25 °C) and 2,2,4-trimethyl-1,3-pentane diol (solubility: 2.0 % at 25 °C) are particularly preferable.

Specific examples of the other polyol compounds include, but are not limited to, aliphatic diols such as 2-ethyl-2-methyl-1,3-propanediol, 3,3-dimethyl-1,2-butane diol, 2,2-diethyl-1,3-propane diol, 2-methyl-2-propyl-1,3- propane diol, 2,4-dimethyl-2,4-pentane diol, 2,5-dimethyl-2,5-hexane diol, and 5-hexene-1,2-diol.

Any other permeating agents that can be dissolved in ink and adjusted to have desired characteristics can be used in combination. Specific examples thereof include, but are not limited to, alkyl and aryl ethers of polyols such as diethylene glycol monophenylether, ethylene glycol monophenyl ether, ethylene glycol monoaryl ether, diethylene glycol monobutyl ether, propylene glycol monobutyl ether, and tetraethylene glycol chlorophenyl ether and lower alcohols such as ethanol.

The content of the permeating agent in the ink for inkjet recording is preferably from 0.1 % by weight to 40 % by weight. When the content is too small, the obtained image may not dry soon, resulting in an blurred image. When the content is too large, the dispersion stability of the coloring agent may deteriorate, nozzles tend to clog, and the permeation into the recording medium tends to be excessive, which leads to a decrease in the image density and occurrence of strike-through.

In addition to the specified above, known additives such as pH adjustment agents, antisepsis and anti-fungal agents, anti-corrosion agents, chelate reagents can be added to the ink of the present disclosure.

The pH adjusting agent is added to stabilize the dispersion state and discharging by maintaining the ink in the stale of alkali. However, when the pH is too high, the head of inkjet and an ink supplying unit tends to be dissolved easily, which results in modification, leakage, bad discharging performance of the ink, etc. over an extended period of use depending on the material forming the head or the unit. When the pigment is used as the coloring agent, it is more desirable to add a pH adjusting agent when the pigment is mixed and kneaded and dispersed together with a dispersant in water than when additives such as a wetting agent and a penetrating agent are added after mixing, kneading, and dispersing. This is because the pH adjusting agent may disrupt the dispersion.

The pH adjusting agent is preferable to contain at least one of an alcohol amine, an alkali metal hydroxide, ammonium hydroxide, a phosphonium hydroxide, and an alkali metal carbonate.

Specific examples of such alcohol amines include, but are not limited to, diethanol amine, triethanol amine, and 2-amino-2ethyl-1,3-propane diol. Specific examples of such alkali metal hydroxides include, but are not limited to, lithium hydroxide, sodium hydroxide, and potassium hydroxide. Specific examples of such ammonium hydroxides include, but are not limited to, ammonium hydroxide and quaternary ammonium hydroxide. Specific examples of such alkali metal carbonates include, but are not limited to, lithium carbonate, sodium carbonate, and potassium carbonate.

Specific examples of the anti-septic and anti-fungal agents include, but are not limited, dehydrosodium acetate, sodium sorbinate, 2-pyridine thiol-1-oxide sodium, sodium benzoate, and pentachlorophenol sodium.

Specific examples of the anti-corrosion agents include, but are not limited to, acid sulfite, thiosodiam sulfate, ammonium thiodiglycolate, diisopropyl ammonium nitrite, pentaerythritol tetranitrate, and dicyclohexyl ammonium nitrite.

Specific examples of the chleate reagents include, but are not limited to, ethylene diamine sodium tetraacetate, nitrilo sodium triacetate, hydroxyethylethylene diamine sodium tri-acetate, diethylene triamine sodium quinternary acetate, and uramil sodium diacetate.

The ink for inkjet recording for use in the present disclosure is manufactured by dispersing or dissolving the coloring agent, the hydrosoluble organic solvent (wetting agent), the surface active agent, and water with optional components such as a permeating (penetrating) agent and other components in an aqueous medium followed by stirring and mixing, if desired. Dispersion is conducted by a sand mill, a homogenizer, a ball mill, a paint shaker, an ultrasonic dispersing agent, etc. Stirring and mixing can be conducted by a stirrer having a typical stirring wing, a magnetic stirrer, a high speed dispersing device, etc.

There is no specific limit to the properties of the ink for inkjet recording of the present disclosure. For example, the viscosity, the surface tension, etc, are preferably in the following ranges.

he viscosity of the ink for inkjet recording is from 5 mPa·S to 15 mPa· at 25 °C. When the ink viscosity is 5 mPa·Sr greater, the printing density and the printing quality are improved. When the ink viscosity is 15 mPa·S or less, a suitable ink discharging property is secured.

he viscosity can be measured by a viscometer (RL-500, manufactured by TOKI SANGYO CO., LTD.) at 25 °C.

The surface tension of the ink for inkjet recording is preferably 35 mN/m or less and more preferably 32 mN/m or less at 25°C. When the surface tension is too strong, the leveling of the ink on a recording medium tends to hardly occur, thereby prolonging the drying time.

There is no specific limit to the selection of colors of the ink for inkjet recording for use in the present disclosure. For example, yellow, magenta, cyan, and black are suitable. When an inkset having at least two kinds of colors is used for recording, multiple color images are produced. When an inkset having all the color combinations is used, full color images can be formed.

The ink for inkjet recording for use in the present disclosure is used in any printer having an inkjet head such as a piezoelectric element type in which ink droplets are discharged by transforming a vibration plate forming the wall of the ink flowing path using a piezoelectric element as a pressure generating device to press the ink in the ink flowing path as described in JP-H2-51734-A; a thermal type in which bubbles are produced by heating ink in the ink flowing path with a heat element as described in JP-S61-59911-A; and an electrostatic type in which ink droplets are discharged by transforming a vibration plate that forms the wall surface of the ink flowing path by a force of electrostatic generated between the vibration plate and the electrode while the vibration plate and the electrode are provided facing each other as described in JP-H6-71882-A).

The ink for inkjet recording of the present disclosure can be used in various things such as for ink for inkjet recording, fountain pens, ball-point pens, magic markers, and felt pens and in particularly suitably for image forming apparatus (printers, etc.) employing an inkjet recording system. For example, it can be used in a printer that has a feature of heating a recording medium and the ink for inkjet recording in a temperature range of from 50 °C to 200 °C during, before, or after printing to promote image fixing. In addition, the ink for inkjet recording can be particularly suitably used in the following inkjet recording method, inkjet recording device, and ink recording material of the present disclosure.

Recording Medium

As the recording medium, plain paper having no coated layer is suitably used. In general, plain paper having a sizing test of 10 seconds or greater and an air permeability of 5 seconds to 50 seconds used as typical photocopying paper is preferable.

Inkjet Recording Method

The inkjet recording method of the present disclosure has an ink discharging process of discharging the ink for inkjet recording to a recording medium by applying stimuli to the ink for inkjet recording of the present disclosure to form images on the recording medium. It can also contain a process of applying a process liquid to the recording medium before and/or after attaching the ink to the recording medium to improve the image quality with regard to the image density, strike-through, blurring, etc.

Ink Discharging Process

The ink discharging process is to fly the ink for inkjet recording by applying stimuli thereto to form images on the recording medium.

Inkjet Recording Device

The inkjet recording device of the present disclosure has an ink discharging device which discharges the ink for inkjet recording to a recording medium by applying stimuli to the ink for inkjet recording of the present disclosure to form images on the recording medium.

Ink Discharging Device

The ink discharging device is a device to apply stimuli (energy) to the ink for inkjet recording to discharge the ink for inkjet recording to a recording medium to form images thereon. There is no specific limit to the ink discharging device. For example, nozzles for discharging ink can be suitably used.

In the present disclosure, it is preferable that at least part of a liquid room, a fluid resistance unit, a vibration plate, and a nozzle is formed of a material that contains at least silicon or nickel. In addition, the diameter of the nozzle of the inkejt nozzle is preferably 30 μm or less and more preferably from 1 μm to 20 μm.

The stimuli (energy) are generated by, for example, a stimulus generating device. There is no specific limit to

the selection of the stimuli. Heat (temperature), pressure, vibration, and light can be suitably used. These can be used alone or in combination. Among these, heat and pressure are preferable.

Specific examples of the stimulus generating device include, but are not limited to, a heater, a pressure device, a piezoelectric element, a vibrator, an ultrasonic oscillator, and light. To be more specific, there are a piezoelectric actuator as the piezoelectric element, a thermal actuator that utilizes the phase change caused by film boiling of liquid using an electric heat conversion element such as a heat element, a shape-memory alloy actuator that uses the metal phase change due to the temperature change, and an electrostatic actuator that uses an electrostatic force.

There is no specific limit to how the ink for inkjet recording flies, which differs depending on the kind of the stimuli. For example, in the case in which the stimulus is "heat", a method can be used in which thermal energy corresponding to recording signals is imparted by, for example, a thermal head to generate bubbles in the ink for inkjet recording and the ink for inkjet recording is discharged and sprayed as droplets by the pressure of the bubbles from the nozzles of the recording head.

In addition, in the case in which the stimulus is "pressure", for example, a method can be used in which the ink for inkjet recording is discharged and sprayed from the nozzle holes of the recording head as droplets by applying a voltage to a piezoelectric element attached to the position of a pressure room located in the ink flowing path in the recording head, thereby bending the piezoelectric element, resulting in a decrease in the volume of the pressure room.

With regard to the droplet of the ink for inkjet recording to be flown, for example, it is preferable that its size is from $3 \times 10^{-15}$ to $40 \times 10^{-15}$ $m^3$ (3 pL to 40 pL), its discharging and spraying speed is from 5 m/s to 20 m/s, and its driving frequency is 1 kHz or more, and the resolution is 300 dpi or more.

There is no specific limit to a controlling device that is be able to control the behavior of each device and any controlling device can be suitably selected. For example, devices such as a sequencer and a computer can be used.

One embodiment of conducting the inkjet recording method of the present disclosure using a serial type inkjet recording device is described with reference to accompanying drawings.

The inkjet recording device illustrated in Fig. 1 has a body 101, a sheet feeder tray 102 to feed recording media to the body 101, a discharging tray 103 attached to the body 101 to store the recording media on which images are formed (recorded), and a ink cartridge inserting unit 104. On the upper surface of the ink cartridge inserting unit 104 is arranged an operating portion 105 such as operation keys and a display.

The ink cartridge inserting unit 104 has a front cover 115 that is openable and closable to detach and attach an ink cartridge 201. The reference numerals 111 and 112 represent a upper surface cover and a front surface, respectively.

Inside the body 101, as illustrated in Figs. 2 and 3, a guide rod 131 serving as a guiding member that laterally bridges side plates on the right hand side and left hand side and a stay 132 hold a carriage 133 slidably in the main scanning direction. A main scanning motor moves the carriage 133 in the direction indicated by the arrow in Fig. 3.

The carriage 133 has a recording head 134 having four inkjet recording heads that discharge ink droplets for inkjet of each color of yellow (Y), cyan (C), magenta (M), and black (Bk) while multiple ink discharging mouths are arranged in the direction crossing the main scanning direction with the ink droplet discharging direction downward.

As the heads for inkjet recording that form the recording heads 134, it is possible to use a device having an energy-generating device to discharge ink such as a piezoelectric actuator such as a piezoelectric element, a thermal actuator that utilizes the phase change caused by film boiling of liquid using an electric heat conversion element such as a heat element, a shape-memory alloy actuator that uses the metal phase change due to the temperature change, and an electrostatic actuator that uses an electrostatic force.

The carriage 133 has sub tanks 135 for each color to supply each color ink to the recording head 134. The ink for inkjet recording of the present disclosure is supplied and replenished to the sub tank 135 from the ink cartridge 201 of the present disclosure mounted onto the ink cartridge inserting unit 104 via a tube for supplying ink for inkjet recording.

A sheet feeding unit to feed a sheet 142 loaded on a sheet loader (pressure plate) 141 of the sheet feeder tray 102 includes a half-moon shape roller (sheet feeding roller 143) to separate and feed the sheet 142 one by one from the sheet loader 141 and a separation pad 144 that is made of a material having a large friction index and arranged facing the sheet feeding roller 143 while biased to the side of the sheet feeding roller 143.

A transfer unit to transfer the sheet 142 fed from the sheet feeding unit below the recording head 134 includes a transfer belt 151 to elecrtrostatically adsorb and transfer the sheet 142, a counter roller 152 to transfer the sheet 142 fed from the sheet feeding unit via a guide 145 by pinching the sheet 142 with the transfer belt 151, a transfer guide 153 to make the sheet 142 follow on the transfer belt 151 by changing the transfer direction of the sheet 142 being sent substantially vertically upward by substantially 90 °, and a front end pressure roller 155 biased to the side of the transfer belt 151 by a pressure member 154. In addition, a charging roller 156 serving as a charger is provided to charge the surface of the transfer belt 151.

The transfer belt 151 is an endless form belt, suspended between a transfer roller 157 and a tension roller 158 and rotatable in the belt transfer direction. This transfer belt 151 include, for example, a top layer serving as a sheet adsorption surface made of a resin material such as a copolymer (ETFE) of tetrafluoroethylene and ethylene with no

resistance control treatment while having a thickness about 40 μm, and a bottom layer (moderate resistance layer, earth layer) made of the same material as the top layer with resistance control treatment with carbon. On the rear side of the transfer belt 151, a guiding member 161 is arranged corresponding to the printing area by the recording head 134. A discharging unit to discharge the sheet 142 on which images are recorded by the recording head 134 includes a separation claw 171 to separate the sheet 142 from the transfer belt 151, a discharging roller 172, and a discharging roller 173. A discharging tray 103 is arranged below the discharging roller 172.

A duplex printing sheet feeding unit 181 is detachably attached to the rear side of the body 101. The duplex printing sheet feeding unit 181 takes in and reverses the sheet 142 that is returned by the reverse rotation of the transfer belt 151 and feeds it again between the counter roller 152 and the transfer belt 151. A manual sheet feeding unit 182 is provided on the upper surface of the duplex printing sheet feeding unit 181

In this inkjet recording device, the sheet 142 is separated and fed from the sheet feeding unit one by one substantially vertically upward, guided by the guide 145, and transferred while being pinched between the transfer belt 151 and the counter roller 152. Furthermore, the front end of the sheet 142 is guided by the transfer guide 153 and pressed against the transfer belt 151 by the front end pressure roller 155 to change the transfer direction by substantially 90 °.

Since the transfer belt 151 is charged by the charging roller 156 at this point in time, the sheet 142 is electrostatically adsorbed by the transfer belt 151 and transferred. By driving the recording head 134 according to the image signal while moving the carriage 133, the ink droplet is discharged to the sheet 142 not in motion to record an image for an amount corresponding to one line and thereafter the sheet 142 is transferred in a predetermined amount to be ready for the recording for the next line. On receiving a signal indicating that the recording has completed or the rear end of the sheet 142 has reached the image recording area, the recording operation stops and the sheet 142 is discharged to the discharging tray 103.

When the remaining amount of the ink for inkjet recording in the sub tank 135 is detected that it is close to empty, a predetermined amount of the ink for inkjet recording is replenished to the sub tank 135 from the ink cartridge 201.

In this inkjet recording device, it is possible to dissemble the chassis of the ink cartridge 201 of the present disclosure and replace the ink bags therein when the ink for inkjet recording is used up in the ink cartridge 201. In addition, the ink cartridge 201 stably supplies the ink for inkjet recording even when the ink cartridge 201 is placed upright (on its side) and installed by front loading. Therefore, even when the body 101 is blocked upside, for example, it is accommodated in a rack or something is placed on the upper surface of the body 101, the ink cartridge 201 is easily exchanged.

A serial type (shuttle type) in which the carriage scans is used in this description but this is true in a line-type inkjet recording device having a line type head.

In addition, the inkjet recording device and the inkjet recording method of the present disclosure can be suitably applied to recordings employing the inkjet recording system, for example, printers, facsimile machines, photocopiers, multi-functional machines of printers, facsimile machines, and photocopiers for inkjet recording.

Ink Recording Material

The inkjet recording material recorded by the inkjet recording device and the inkjet recording method of the present disclosure is the ink recording material of the present disclosure.

The inkjet recording material of the present disclosure is configured by images formed on a recording medium by using the ink for inkjet recording of the present disclosure.

There is no specific limit to the recording medium. Specific examples thereof include, but are not limited to, plain paper, gloss paper, and general-purpose printing paper. These can be used alone or in combination.

The ink recording material is of high image quality without blurring and excellent in stability over time so that it can be suitably used for various purposes as reference materials, etc, on which texts and/or images, etc. of various kinds are recorded.

Having generally described preferred embodiments of this invention, further understanding can be obtained by reference to certain specific examples which are provided herein for the purpose of illustration only and are not intended to be limiting. In the descriptions in the following examples, the numbers represent weight ratios in parts, unless otherwise specified.

EXAMPLES

Next, the present disclosure is described in detail with reference to Examples and Comparative examples but not limited thereto.

Each of pigment dispersing element is prepared as follows.

Pigment dispersing element K1

Mix 300 g of acidic carbon black (Monarch 1300, manufactured by Cabot Corporation) in 1,000 g of water well and thereafter drop 450 g of sodium hypochlorite (effective chlorine concentration of 12 mol %) thereto followed by stirring at 100 °C to 105°C for eight hours.

Furthermore, add 100 g of sodium hypochlorite (effective chlorine concentration of 12 mol %) to the liquid and disperse the resultant by DYNO-MILL KDL A type (manufactured by Willy A. Bachofen AG) which is filled with zirconia beads having a diameter of 0.5 mm at 2,000 rpm for two hours to obtain a slurry.

Dilute the obtained slurry with water to be the concentration thereof is one-tenth, adjusts pH thereof by lithium hydroxide followed by desalting condensation with an ultra-filtration membrane till an electriconductivity of 0.2 mS/cm.

Furthermore, remove coarse particles by centrifugal followed by filtering with a nylon filter of 1 μm to obtain black pigment dispersing element K1 having a pigment concentration of 15 %.

Pigment Dispersing Element C1

Cyan pigment dispersing element C1 having a pigment concentration of 15 % is obtained in the same manner as in the method for the black pigment dispersing element K1 except that the pigment is changed to C.I. Pigment Blue 15:3 (HELIOGENBlue D7079, manufactured by BASF Japan Ltd.).

Pigment Dispersing Element M2

Material for Dispersing Element

| | |
|---|---|
| · C.I. Pigment Violet 19 (CINQUASIA PACIFIC Red 2020, manufactured by Chiba Specialty Chemicals) | 15.0 parts |
| · Dispersant represented by the following Chemical Structure 15 | 5.0 parts |

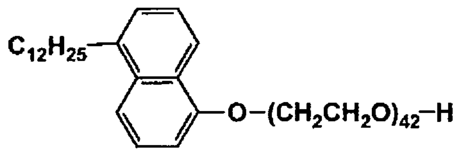

Chemical Structure 15

| | |
|---|---|
| · Deionized water | 80.0 parts |

Add and dissolve the dispersant in water and admix and stir the pigment sufficiently for moistening followed by mixing and kneading by a mixing and kneading machine (DYNO-MILL KDL A type, manufactured by Willy A. Bachofen AG) which is filled with zirconia beads having a diameter of 0.5 mm at 2,000 rpm for 60 minutes.

Then, extract the mill base followed by filtration with a filter of 1 μm to obtain a magenta pigment dispersing element M1 having a pigment concentration of 15%.

Pigment Dispersion Body Y3

Material for Dispersing Element

| | |
|---|---|
| · C.I. Pigment Yellow 155 (TONER YELLOW 3GP, manufactured by Clariant Japan K.K.) | |
| · Dispersant represented by the following Chemical Structure 16 | 5.0 parts |

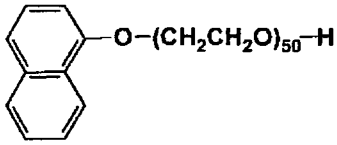

Chemical Structure 16

| | |
|---|---|
| · Deionized water | 80.0 parts |

Yellow pigment dispersing element Y1 having a pigment concentration of 15 % is obtained using the pigment and the dispersant specified above in the same manner as in the method for the pigment dispersing element M1.

Pigment Dispersing Element K2

| Material for Dispersing Element | |
|---|---|
| · Carbon Black (NiPex 150, manufactured by Degussa AG) | 15.0 parts |
| · Alkyl naphthalene sodium sulfonate (PELEX NB-L, manufactured by Kao Corporation) | |
| · Deionized water | 70.0 parts |

Black pigment dispersing element K2 having a pigment concentration of 15 % is obtained using the pigment and the dispersant specified above in the same manner as in the method for the pigment dispersing element M1.

Pigment Dispersing Element M2

Magenta pigment dispersing element M2 having a pigment concentration of 15 % is obtained in the same manner as in the method for the yellow pigment dispersing element Y1 except that the pigment is changed to C.I. Pigment Red 122 (Jet Magenta DMQ, manufactured by Chiba Specialty Chemicals).

Pigment Dispersing Element C2

Cyan pigment dispersing element C2 having a pigment concentration of 15 % is obtained in the same manner as in the method for the yellow pigment dispersing element Y1 except that the pigment is changed to C.I. Pigment Blue 15:3 (HELIOGENBlue D7079, manufactured by BASF Japan Ltd.). Pigment Dispersing Element Y2

(1) Synthesis of Polymer A

| Material for Polymer A | |
|---|---|
| · Decanoic acid epoxy ester (Cardura E-10P, manufactured by Japan Epoxy Resin Co., Ltd.) | 10 parts |
| · Adipic acid | 27.0 parts |
| Hexahydro phthalic anhydride | 42.0 parts |
| · Neopentyl glycol | 2.0 parts |
| · Trimethylol propane | 26.0 parts |
| · Dibutyl tin dioxide | 0.1 parts |

Place the recipe specified above in a flask equipped with a dehydration tube, a thermometer, a nitrogen gas -introducing tube, and a stirrer and heat the system to 180°C in three hours to conduct dehydration condensation reaction while dehydrating to obtain Polymer A (polyester resin).

2 Manufacturing of Pigment Dispersing Element

| Material for Dispersing Element | |
|---|---|
| · C.I. Pigment Yellow 74 (HANSA Yellow 5GX01, manufactured by Clariant Japan K.K.) | |
| · Polymer A | 15.0 parts |
| · 2-amino-2-methyl-1,3-propane diol | 1.0 part |
| · Deionized water | 72.0 parts |

A pigment dispersing element is manufactured using the recipe specified above as follows: Add 2-amino-2-methyl-1,3-propane diol to the polymer A and dissolve it in water and mix and stir the pigment sufficiently for moistening

followed by mixing and kneading by a mixing and kneading machine (DYNO-MILL KDL A type, manufactured by Willy A. Bachofen AG) which is filled with zirconia beads having a diameter of 0.5 mm at 2,000 rpm for 40 minutes.

Then, add 3 parts of 1 normal hydrochloric acid to the thus-obtained mill base followed by stirring. Add 400 parts of deionized water thereto followed by stirring sufficiently. Separate the mixture into the pigment paste and water using a centrifugal followed by removing the supernatant liquid several times.

Then, add 2-amino-2-methyl-1,3-propane diol as a basic compound to the resultant followed by mixing and kneading by the mixing and kneading machine specified above, extract a mill base, and filter the resultant by a filter having an opening of 1 μm to obtain a yellow pigment dispersing element Y2 having a pigment concentration of 15 %.

Pigment Dispersing Element M3

(1) Synthesis of Polymer B

Material 1 for Polymer B

| | |
|---|---|
| · Styrene | 11.2 parts |
| · Acrylic acid | 2.8 parts |
| · Lauryl methacrylate | 12.0 parts |
| · Polyethylene glycol methacrylate | 4.0 parts |
| · Styrene macromer (AS-6, manufactured by TOAGOSEI CO., LTD.) | 4.0 parts |
| · Mercapto ethanol | 0.4 parts |

After sufficient replacement with nitrogen gas in a flask equipped with a mechanical stirrer, a thermometer, a nitrogen gas introducing tube, a reflux tube, and a dripping funnel, place the material 1 for polymer B therein followed by heating to 65°C.

Material 2 for Polymer B

| | |
|---|---|
| · Styrene | 100.8 parts |
| · Acrylic acid | 25.2 parts |
| · Lauryl methacrylate | 108.0 parts |
| · Polyethylene glycol methacrylate | 36.0 parts |
| · Hydroxy ethyl methacrylate | 60.0 parts |
| · Styrene macromer (AS-6, manufactured by TOAGOSEI CO., LTD.) | 36.0 parts |
| · Mercapto ethanol | 3.6 parts |
| · Azobis dimethyl valero nitrile | 2.4 parts |
| · Methylethylketone: | 18.0 parts |

Thereafter, drop the liquid mixture of the material 2 for polymer B to the heated flask in 2.5 hours.

After dropping, drop a liquid mixture of 0.8 parts of azobis dimethyl valeronitrile and 18.0 parts of methylethyl ketone to the flask in half an hour. Subsequent to one-hour aging at 65 °C, add 0.8 parts of azobisdimethyl valeronitrile followed by further one-hour aging.

After the reaction is complete, add 364.0 parts of methylethyl ketone to the flask to obtain 800 parts of a polymer B solution having a concentration of 50 %.

Prepare a dispersing element using a dispersing element material having the following recipe including this polymer B solution. Stir the pigment and the polymer B solution sufficiently followed by mixing and kneading with a three-roll mill (NR-84A, manufactured by Noritake Co., Ltd.) 20 times. Place the thus-obtained paste in 200 parts of deionized water and subsequent to sufficient stirring, distill away methylethyl ketone and water using an evaporator to obtain a magenta polymer dispersing element M3 having a pigment concentration of 15 %.

Material for Dispersing Element

| | |
|---|---|
| · C.I. Pigment Red 122 (Jet Magenta DMQ, manufactured by Chiba Specialty Chemicals) | |
| · Polymer B solution | 28.0 parts |
| · 1 mol/1 potassium hydroxide aqueous solution | 13.6 parts |
| · Methylethylketone: | 20.0 parts |

(continued)

| | |
|---|---|
| · Deionized water | 30.0 parts |

Pigment Dispersing Element C3

Cyan pigment dispersing element C3 having a pigment concentration of 15 % is obtained in the same manner as in the method for the magenta pigment dispersing element M3 except that the pigment is changed to C.I. Pigment Blue 15:3 (HELIOGENBlue D7079, manufactured by BASF Japan Ltd.).

Pigment Dispersing Element K3

Preparation of Polymer Solution B

After sufficient replacement with nitrogen gas in a flask equipped with a mechanical stirrer, a thermometer, a nitrogen gas introducing tube, a reflux tube, and a dripping funnel, mix 11.2 g of styrene, 2.8 g of acrylic acid, 12.0 g of lauryl methacrylate, 4.0 g of polyethlene glycol methacrylate, 4.0 g of styrene macromer, and 0.4 g of mercapto ethanol in the flask and heat the system to 65 °C; Next, drop a liquid mixture of 100.8 g of styrene, 25.2 g of acrylic acid, 108.0 g of lauryl methacrylate, 36.0 g of polyethylene glycol methacrylate, 60.0 g of hydroxyethyl methacrylate, 36.0 g of styrene macromer, 3.6 g of mercapto ethanol, 2.4 g of azobisdimethyl valeronitrile, and 18 g of methylethyl ketone in the flask in two and a half hours. Subsequently, drop a liquid mixture of 0.8 g of azobis methyl valeronitrile and 18 g of methylethyl ketone to the flask in half an hour. After one-hour aging at 65 °C, add 0.8 g of azobismethyl valeronitrile followed by further one-hour aging. After the reaction is complete, add 364 g of methylethyl ketone to the flask to obtain 800 g of a polymer solution B having a concentration of 50 % by weight.

Preparation of Pigment Containing Polymer Particulate dispersing element K3

Sufficiently stir 28 g of the polymer solution B, 42 g of carbon black (FW100, manufactured by Degussa AG), 13.6 g of 1 mol/l potassium hydroxide solution, 20 g of methylethyl ketone, and 13.6 g of deionized water followed by mixing and kneading with a roll mill oto obtain a paste. Place the obtained paste in 200 g of pure water followed by sufficient stirring. Distill away methylethyl ketone and water using an evaporator and remove coarse particles by filtrating the thus-obtained liquid dispersion with a polyvinylidene fluoride membrane filter having an average hole diameter of 5.0 μm under pressure to obtain a pigment containing polymer particulate liquid dispersion K3 containing a pigment in an amount of 15 % by weight and a solid portion of 20 % by weight.

Pigment Dispersing Element Y3

Pigment containing polymer particulate liquid dispersion Y3 containing a pigment in an amount of 15 % by weight and a solid portion of 20 % by weight is obtained in the same manner as in the method for the pigment containing polymer particulate liquid dispersion K3 except that the pigment is changed to a monoazo yellow pigment (C.I. Pigment Yellow 74).

Preparation of Ink

Preparation Examples 1 to 38

Preparation Examples 1 to 15 and 27 to 38 are Examples and Preparation Examples 16 to 26 are Comparative Examples.

Mix and stir each pigment dispersing element and other materials shown in Tables 1 to 3 for one and a half hour and filter the mixture with a membrane filter having an opening hole diameter of 0.8 μm to obtain ink of Preparation Examples of 1 to 38.

The preparation sequence of the ink is from the hydrosoluble organic solvent, the surface active agent, the penetrating agent, to pure water and after mixing and stirring them for 30 minute, add the additives other than the pigment dispersing element to the liquid mixture followed by mixing and stirring for 30 minutes and add the pigment dispersing element to the resultant followed by a 30 minute mixing and stirring.

The blending ratios of the pigment dispersing element and the other materials are as shown in Tables. The pigment dispersing element is prepared such that the solid portion of the liquid dispersion is the blending amount.

Abbreviation, etc. in the Tables represent the following:

* JONCRYL 7100: Styrene-acrylic resin emulsion (Solid portion 48 %, manufactured by BASF Japan Ltd.)
* SUPER FLEX 110: Urethane resin emulsion (solid portion 30 %, manufactured by DAI-ICHI KOGYO SEIYAKU CO., LTD.)
* AP4710: Acrylic silicone resin emulsion (manufactured by SHOWA HIGHPOLYMER CO., LTD.)
* W-5661: Urethane resin emulsion (solid portion 35 %, manufactured by MITSUI TAKEDA CHEMICALS INC.)
* KF-642: Polyether modified silicone compound (component 100 % by weight, manufactured by Shin-Etsu Chemical Co., Ltd.)
* Zonyl FS-300: Polyoxyethylene perfluoroalkyl ether (component 40 % by weight, Du Pont Kabushiki Kaisha)
* SOFTANOL EP-7025: polyoxyalkylene alkyl ether (component 100 % by weight, manufactured by NIPPON SHOKUBAI CO., LTD.)
* Proxel GXL: mildew-proofing agent mainly composed of 1,2-benzisothiazolin-3-one, component: 20 % by weight, containing dipropylene glycol, manufactured by Avecia)

Table 1

| | | Equilibrium Moisture Content of 20 % by Weight or Less at 23 °C and 80 % RH | Preparation Examples | | | | | | |
|---|---|---|---|---|---|---|---|---|---|
| | | | 1 | 2 | 3 | 4 | 5 | 6 | 7 |
| Pigment Dispersing Element | Dispersing Element K1 (solid portion) | | 6 | 6 | 6 | 6 | 6 | | |
| | Dispersing Element K2 (solid portion) | | | | | | | 6 | 6 |
| | Dispersing Element K3 (solid portion) | | | | | | | | |
| Resin Emulsion | JONCRYL 7100 | | 3 | | | 3 | | 3 | |
| | SUPER FLEX 110 | | | 5 | 5 | | 5 | | 5 |
| Solvent having equilibrium moisture content of 20 % by weight or less | Isopropyl glycol | 15 % | | | | | | | |
| | Butyl propylene glycol | 6 % | | | | | | | |
| | Triiso propylene glycol monomethyl ether | 13 % | 5 | 15 | | 20 | | 10 | |
| | 2-(2-iso propyloxy ethoxy) ethanol | 18 % | 20 | | 10 | | 15 | | 20 |

| | | | | | | | | | |
|---|---|---|---|---|---|---|---|---|---|
| Solvent having equilibrium moisture content of more than 20 % by weight | Glycerine | 49 % | 10 | | 10 | | 10 | | |
| | 1,3-butan diol | 35 % | | 10 | | 10 | | 10 | |
| Compound represented by Chemical Structure 2 | β-buthoxy-N,N-dimethyl propion amide | | 5 | 10 | 10 | 5 | 10 | 20 | 15 |
| | β-methoxy-N,N-dimethyl propion amide | | | | | | | | |
| Compound represented by Chemical Structure 1 | 1,3-dimethyl-2-imidazoli dinone | | 5 | 9 | 9 | | | | |
| | 1,3-diethyl-2-imidazoli dinone | | | | | 5 | 9 | 5 | 5 |
| Surface Active Agent | KF-642 | | | | | 0.5 | | | |
| | Zonyl FS-300 | | 0.5 | 0.5 | | | 0.5 | 0.5 | |
| | SOFTANOL EP-7025 | | | | 0.5 | | | | 0.5 |
| Penetrating agent | 2-ethyl-1,3-hexane diol | | 2 | | 2 | | 2 | | 2 |
| | 2,2,4-trimethyl-1,3-pentane diol | | | 2 | | 2 | | 2 | |
| Mildew-proofing Agent | Proxel GXL | | 0.05 | 0.05 | 0.05 | 0.05 | 0.05 | 0.05 | 0.05 |
| Pure water | | | * | * | * | * | * | * | * |
| Total | | | 100 | 100 | 100 | 100 | 100 | 100 | 100 |
| Addition amount of hydrosoluble organic solvent having equilibrium moisture content of 20 % by weight or less | | | 25 | 15 | 10 | 20 | 15 | 10 | 20 |
| Total amount of hydrosoluble organic solvent | | | 47.5 | 46.5 | 41.5 | 42.5 | 46.5 | 47.5 | 42.5 |
| Addition amount of compound represented by Chemical Structure 1 | | | 5 | 9 | 9 | 5 | 9 | 5 | 5 |
| Addition amount of compound represented by Chemical Structure 2 | | | 5 | 10 | 10 | 5 | 10 | 20 | 15 |

| | | Equilibrium moisture content of 20 % by weight or less at 23 °C and 80 % RH | Preparation Example | | | | | | | |
|---|---|---|---|---|---|---|---|---|---|---|
| | | | 8 | 9 | 10 | 11 | 12 | 13 | 14 | 15 |
| Pigment Dispersing Element | Dispersing Element K1 (solid portion) | | | | | | | | | |
| | Dispersing Element K2 (solid portion) | | 6 | | | | | | | |
| | Dispersing Element K3 (solid portion) | | | 6 | 6 | 6 | 6 | 6 | 6 | 6 |
| Resin Emulsion | JONCRYL 7100 | | 3 | | | 3 | 3 | 3 | 3 | 3 |
| | SUPER FLEX 110 | | | 5 | 5 | | | | | |
| Solvent having equilibrium moisture content of 20 % by weight or less | Isopropyl glycol | 15 % | | | 20 | | 20 | | 20 | |
| | Butyl propylene glycol | 6 % | | | | 20 | | 20 | | 20 |
| | Triiso propylene glycol monomethyl ether | 13 % | 15 | | | | | | | |
| | 2-(2-iso propyloxy ethoxy) ethanol | 18 % | | 10 | | | | | | |
| Solvent having equilibrium moisture content of more than 20 % by weight | Glycerine | 49 % | | | | | | | | |
| | 1,3-butan diol | 35 % | | | | | | | | |
| Compound represented by Chemical Structure 2 | β-buthoxy-N,N-dimethyl propion amide | | 20 | 20 | 10 | 10 | 20 | | | |
| | β-methoxy-N,N-dimethyl propion amide | | | | | | | 10 | 10 | 10 |
| Compound represented by Chemical Structure 1 | 1,3-dimethyl-2-imidazoli dinone | | | | | | | | | |
| | 1,3-diethyl-2-imidazoli dinone | | 5 | 9 | 9 | 9 | 5 | 9 | 9 | 9 |

| | | | | | | | | | | |
|---|---|---|---|---|---|---|---|---|---|---|
| Surface active agent | KF-642 | | 0.5 | | | 0.5 | 0.5 | 0.5 | 0.5 | 0.5 |
| | Zonyl FS-300 | | | | | | | | | |
| | SOFTANOL EP-7025 | | | 0.5 | 0.5 | | | | | |
| Penetrating agent | 2-ethyl-1,3-hexane diol | | | 2 | 2 | | | | | |
| | 2,2,4-trimethyl-1,3-pentane diol | | 2 | | | 2 | 2 | 2 | 2 | 2 |
| Mildew-proofing Agent | Proxel GXL | | 0.05 | 0.05 | 0.05 | 0.05 | 0.05 | 0.05 | 0.05 | 0.05 |
| Pure Water | | | * | * | * | * | * | * | * | * |
| Total | | | 100 | 100 | 100 | 100 | 100 | 100 | 100 | 100 |
| Addition amount of hydrosoluble organic solvent having equilibrium moisture content of 20 % by weight or less | | | 15 | 10 | 20 | 20 | 20 | 20 | 20 | 28 |
| Total amount of hydrosoluble organic solvent | | | 42.5 | 41.5 | 41.5 | 41.5 | 47.5 | 41.5 | 41.5 | 49.5 |
| Addition amount of compound represented by Chemical Structure 1 | | | 5 | 9 | 9 | 9 | 5 | 9 | 9 | 9 |
| Addition amount of compound represented by Chemical Structure 2 | | | 20 | 20 | 10 | 10 | 20 | 10 | 10 | 10 |

* Compensation amount to 100 (i.e., Subtract the total amounts of the other components from 100)

Table 2

| | | Equilibrium moisture content of 20 % by weight or less at 23 °C and 80 % RH | Preparation Example | | | | |
|---|---|---|---|---|---|---|---|
| | | | 16 | 17 | 18 | 19 | 20 |
| Pigment Dispersing Element | Dispersing Element K1 (solid portion) | | 6 | 6 | 6 | 6 | 6 |
| | Dispersing Element K2 (solid portion) | | | | | | |
| | Dispersing Element K3 (solid portion) | | | | | | |
| Resin Emulsion | JONCRYL 7100 | | 3 | | 3 | | 3 |
| | SUPER FLEX 110 | | | 5 | | 5 | |
| Solvent having equilibrium moisture content of 20 % by weight or less | Isopropyl glycol | 15 % | | | | | |
| | Butylpropylene glycol | 6 % | | | | | |
| | Triisopeopylene glycol monomethyl ether | 13 % | 15 | 15 | 15 | 5 | 30 |

| | | | | | | | |
|---|---|---|---|---|---|---|---|
| | 2-(2-isopropyloxy ethoxy) ethanol | 18 % | | | | | |
| Solvent having equilibrium moisture content of more than 20 % by weight | Glycerine | 49 % | 15 | 15 | 10 | | 5 |
| | 1,3-butan diol | 35 % | 5 | 5 | | 10 | |
| Compound represented by Chemical Structure 2 | β-buthoxy-N,N-dimethylpropion amide | | | 5 | | 5 | 5 |
| | β-methoxy-N,N-dimethylpropion amide | | | | 5 | | |
| Compound represented by Chemical Structure 1 | 1,3-dimethyl-2-imidazolidinone | | | 2 | 12 | 5 | |
| | 1,3-diethyl-2-imidazolidinone | | 5 | | | | 5 |
| Surface active agent | KF-642 | | 0.5 | | | | 0.5 |
| | Zonyl FS-300 | | | 0.5 | 0.5 | | |
| | SOFTANOL EP-7025 | | | | | 0.5 | |
| Penetrating agent | 2-ethyl-1,3-hexane diol | | | 2 | | 2 | |
| | 2,2,4-trimethyl-1,3-pentane diol | | 2 | | 2 | | 2 |
| Mildew-proofing Agent | Proxel GXL | | 0.05 | 0.05 | 0.05 | 0.05 | 0.05 |
| Pure water | | | * | * | * | * | * |
| Total | | | 100 | 100 | 100 | 100 | 100 |
| Addition amount of hydrosoluble organic solvent having equilibrium moisture content of 20 % by weight or less | | | 15 | 15 | 15 | 5 | 30 |
| Total amount of hydrosoluble organic solvent | | | 42.5 | 44.5 | 44.5 | 27.5 | 47.5 |
| Addition amount of compound represented by Chemical Structure 1 | | | 5 | 2 | 12 | 5 | 5 |
| Addition amount of compound represented by Chemical Structure 2 | | | 0 | 5 | 5 | 5 | 5 |

| | | Equilibrium moisture content of 20 % by weight or less at 23 °C and 80 % RH | Preparation Example | | | | | |
|---|---|---|---|---|---|---|---|---|
| | | | 21 | 22 | 23 | 24 | 25 | 26 |
| Pigment Dispersing Element | Dispersing Element K1 (solid portion) | | 6 | 6 | | | | |
| | Dispersing Element K2 (solid portion) | | | | 6 | | 6 | |
| | Dispersing Element K3 (solid portion) | | | | | 6 | | 6 |
| Resin Emulsion | JONCRYL 7100 | | 3 | | 3 | | 3 | |
| | SUPER FLEX 110 | | | 5 | | 5 | | 5 |
| Solvent having equilibrium moisture content of 20 % by weight or less | Isopropyl glycol | 15 % | | | | | | |
| | Butylpropylene glycol | 6 % | | | | | | |
| | Triisopeopylene glycol monomethyl ether | 13 % | 15 | 20 | 20 | 15 | 20 | 20 |
| | 2-(2-isopropyloxy ethoxy) ethanol | 18 % | | | | | | |
| Solvent having equilibrium moisture content of more than 20 % by weight | Glycerine | 49 % | 8 | 20 | 15 | 15 | 5 | 20 |
| | 1,3-butan diol | 35 % | | | | | | |
| Compound represented by Chemical Structure 2 | β-buthoxy-N,N-dimethylpropion amide | | 5 | 5 | | 5 | 5 | 5 |
| | β-methoxy-N,N-dimethylpropion amide | | | | | | | |
| Compound represented by Chemical Structure 1 | 1,3-dimethyl-2-imidazolidinone | | 5 | 5 | 8 | | 12 | 5 |
| | 1,3-diethyl-2-imidazolidinone | | | | | 3 | | |
| Surface Active Agent | KF-642 | | | | | 0.5 | | |
| | Zonyl FS-300 | | 0.5 | 0.5 | | | 0.5 | 0.5 |
| | SOFTANOL EP-7025 | | | | 0.5 | | | |
| Penetrating agent | 2-ethyl-1,3-hexane diol | | 2 | | 2 | | 2 | |
| | 2,2,4-trimethyl-1,3-pentane diol | | | 2 | | 2 | | 2 |

| | | | | | | | | |
|---|---|---|---|---|---|---|---|---|
| Mildew-proofing Agent | Proxel GXL | | 0.05 | 0.05 | 0.05 | 0.05 | 0.05 | 0.05 |
| Pure water | | | * | * | * | * | * | * |
| Total | | | 100 | 100 | 100 | 100 | 100 | 100 |
| Addition amount of hydrosoluble organic solvent having equilibrium moisture content of 20 % by weight or less | | | 15 | 20 | 20 | 15 | 20 | 20 |
| Total amount of hydrosoluble organic solvent | | | 35.5 | 52.5 | 45.5 | 40.5 | 44.5 | 52.5 |
| Addition amount of compound represented by Chemical Structure 1 | | | 5 | 5 | 8 | 3 | 12 | 5 |
| Addition amount of compound represented by Chemical Structure 2 | | | 5 | 5 | 0 | 5 | 5 | 5 |

* Compensation amount to 100 (i.e., Subtract the total amounts of the other components from 100)

Table 3

| | | Equilibrium Moisture Content of 20 % by Weight or Less at 23 °C and 80 % RH | Preparation Example | | | | | |
|---|---|---|---|---|---|---|---|---|
| | | | 27 | 28 | 29 | 30 | 31 | 32 |
| Pigment Dispersing Element | Dispersing Element K1 (solid portion) | | 8 | | | | | |
| | Dispersing Element Y1 (solid portion) | | | 5 | | | | |
| | Dispersing Element M1 (solid portion) | | | | 5 | | | |
| | Dispersing Element C1 (solid portion) | | | | | 5 | | |
| | Dispersing Element K2 (solid portion) | | | | | | 8 | |
| | Dispersing Element Y2 (solid portion) | | | | | | | 5 |
| | Dispersing Element M2 (solid portion) | | | | | | | |
| | Dispersing Element C2 (solid portion) | | | | | | | |
| | Dispersing Element K3 (solid portion) | | | | | | | |

| | | | | | | | | |
|---|---|---|---|---|---|---|---|---|
| | Dispersing Element Y3 (solid portion) | | | | | | | |
| | Dispersing Element M3 (solid portion) | | | | | | | |
| | Dispersing Element C3 (solid portion) | | | | | | | |
| Resin Emulsion | Acrylic Silicone AP4710 | | 1.5 | 1.5 | 1.5 | 1.5 | 1.5 | 1.5 |
| | Urethane W5661 | | 1 | 1 | 1 | 1 | 1 | 1 |
| Solvent having equilibrium moisture content of 20 % by weight or less | Isopropyl Glycol | 15 % | | | | | 15 | 15 |
| | Butylpropylene glycol | 6 % | | | | | | |
| | Triisopeopylene glycol monomethyl ether | 13 % | 15 | 15 | 15 | 15 | | |
| | 2-(2-isopropyloxy ethoxy) ethanol | 18 % | | | | | | |
| Solvent having equilibrium moisture content of more than 20 % by weight | Glycerine | 49 % | 10 | 10 | 10 | 10 | 10 | 10 |
| | 1,3-butan diol | 35 % | | 5 | 5 | 5 | | 5 |
| | 3-methyl-1,3-butane-diol | 23% | 5 | | | | 5 | |
| Compound represented by Chemical Structure 2 | β-buthoxy-N,N-dimethylpropion amide | | 3 | 3 | 3 | 3 | 3 | 3 |
| | β-methoxy-N,N-dimethylpropion amide | | 3 | 3 | 3 | 3 | 3 | 3 |
| Compound represented by Chemical Structure 1 | 1,3-dimethyl-2-imidazolidinone | | 5 | 5 | 5 | 5 | 5 | 5 |
| Surface active agent | Zonyl FS-300 | | | | | | 0.5 | 0.5 |
| | SOFTANOL EP-7025 | | 0.5 | 0.5 | 0.5 | 0.5 | | |
| Penetrating agent | 2-ethyl-1,3-hexane diol | | 2 | | 2 | | 2 | |
| | 2,2,4-trimethyl-1,3-pentane diol | | | 2 | | 2 | | 2 |
| mildew-proofing agent | Proxel GXL | | 0.05 | 0.05 | 0.05 | 0.05 | 0.05 | 0.05 |
| Pure water | | | * | * | * | * | * | * |
| Total | | | 100 | 100 | 100 | 100 | 100 | 100 |

| | | | | | | | |
|---|---|---|---|---|---|---|---|
| Addition amount of hydrosoluble organic solvent having equilibrium moisture content of 20 % by weight or less | | 15 | 15 | 15 | 15 | 15 | 15 |
| Total amount of hydrosoluble organic solvent | | 43.5 | 43.5 | 43.5 | 43.5 | 43.5 | 43.5 |
| Addition amount of compound represented by Chemical Structure 1 | | 5 | 5 | 5 | 5 | 5 | 5 |
| Addition amount of compound represented by Chemical Structure 2 | | 6 | 6 | 6 | 6 | 6 | 6 |

| | | Equilibrium Moisture Content of 20 % by Weight or Less at 23 °C and 80 % RH | Preparation Example | | | | | |
|---|---|---|---|---|---|---|---|---|
| | | | 33 | 34 | 35 | 36 | 37 | 38 |
| Pigment Dispersing Element | Dispersing Element K1 (solid portion) | | | | | | | |
| | Dispersing Element Y1 (solid portion) | | | | | | | |
| | Dispersing Element M1 (solid portion) | | | | | | | |
| | Dispersing Element C1 (solid portion) | | | | | | | |
| | Dispersing Element K2 (solid portion) | | | | | | | |
| | Dispersing Element Y2 (solid portion) | | | | | | | |
| | Dispersing Element M2 (solid portion) | | 5 | | | | | |
| | Dispersing Element C2 (solid portion) | | | 5 | | | | |
| | Dispersing Element K3 (solid portion) | | | | 8 | | | |
| | Dispersing Element Y3 (solid portion) | | | | | 5 | | |
| | Dispersing Element M3 (solid portion) | | | | | | 5 | |

| | | | | | | | | |
|---|---|---|---|---|---|---|---|---|
| | Dispersing Element C3 (solid portion) | | | | | | | 5 |
| Resin Emulsion | Acrylic silicone AP4710 | | 1.5 | 1.5 | 1.5 | 1.5 | 1.5 | 1.5 |
| | Urethane W5661 | | 1 | 1 | 1 | 1 | 1 | 1 |
| Solvent having equilibrium moisture content of 20 % by weight or less | Isopropyl glycol | 15 % | 15 | 15 | | | | |
| | Butylpropylene glycol | 6 % | | | 5 | 5 | 5 | 5 |
| | Triisopeopylene glycol monomethyl ether | 13 % | | | 5 | 5 | 5 | 5 |
| | 2-(2-isopropyloxy ethoxy) ethanol | 18 % | | | 5 | 5 | 5 | 5 |
| Solvent having equilibrium moisture content of more than 20 % by weight | Glycerine | 49 % | 10 | 10 | 10 | 10 | 10 | 10 |
| | 1,3-butan diol | 35 % | 5 | 5 | | 5 | 5 | 5 |
| | 3-methyl-1,3-butane-diol | 23% | | | 5 | | | |
| Compound represented by Chemical Structure 2 | β-buthoxy-N,N-dimethylpropion amide | | 3 | 3 | 3 | 3 | 3 | 3 |
| | β-methoxy-N,N-dimethylpropion amide | | 3 | 3 | 3 | 3 | 3 | 3 |
| Compound represented by Chemical Structure 1 | 1,3-dimethyl-2-imidazolidinone | | 5 | 5 | 5 | 5 | 5 | 5 |
| Surface active agent | Zonyl FS-300 | | 0.5 | 0.5 | 0.5 | 0.5 | 0.5 | 0.5 |
| | SOFTANOL EP-7025 | | | | | | | |
| Penetrating agent | 2-ethyl-1,3-hexane diol | | 2 | | 2 | | 2 | |
| | 2,2,4-trimethyl-1,3-pentane diol | | | 2 | | 2 | | 2 |
| Mildew-proofing Agent | Proxel GXL | | 0.05 | 0.05 | 0.05 | 0.05 | 0.05 | 0.05 |
| Pure water | | | * | * | * | * | * | * |
| Total | | | 100 | 100 | 100 | 100 | 100 | 100 |
| Addition amount of hydrosoluble organic solvent having equilibrium moisture content of 20 % by weight or less | | | 15 | 15 | 15 | 15 | 15 | 15 |

| | | | | | | | |
|---|---|---|---|---|---|---|---|
| Total amount of hydrosoluble organic solvent | | 43.5 | 43.5 | 43.5 | 43.5 | 43.5 | 43.5 |
| Addition amount of compound represented by Chemical Structure 1 | | 5 | 5 | 5 | 5 | 5 | 5 |
| Addition amount of compound represented by Chemical Structure 2 | | 6 | 6 | 6 | 6 | 6 | 6 |

* Compensation amount to 100 (i.e., Subtract the total amounts of the other components from 100)

Preparation of Evaluation on Printed Image

In an environment in which the temperature and moisture are adjusted to be 23 °C and 50 % RH, set an inkjet printer (IPSIO GXe 5500, manufactured by Ricoh Co., Ltd.) to discharge ink in such a manner that the same amount of the ink is attached to the recording media by changing the driving voltage of a piezoelectric element.

Discharging Stability

Continue printing a chart of solid images occupying an area ratio of 5 % per color made by Microsoft Word 2000 with a run length of 200 sheets (A4 size, Type 6200, manufactured by NBS Ricoh Co., Ltd.) and disturbance of ink discharging by each nozzle is evaluated after the printing.

The printing mode is: a modified mode in which "Plain Paper - Standard Fast" is modified to "no color calibration" from a user setting for plain paper by a driver contained in the printer.

Evaluation Criteria

G (Good): No discharging disturbance
F (Fair): Slight discharging disturbance observed
B (Bad): Discharging disturbance observed or no discharging observed

Details of recording media for use in Examples and Comparative Examples are described below.

* My Paper (quality paper): manufactured by Ricoh Co., Ltd.; Basis weight: 69.6 g/m$^2$; Sizing test: 23.2 seconds; Air permeability: 21 seconds
* HAMMERMILL FORE MP: INTERNATIONAL PAPER

Evaluation on Curling

Print a "square solid" chart set at the border of the printing range prepared by Microsoft Word 2000 on the recording medium and place it on a flat surface with the printed surface facing down within five seconds of printing.

Measure the height of the four corners of the recording medium from the flat surface and evaluate the curling according to the following evaluation criteria.

The printing mode is: "Plain Paper - Standard Fast" by a driver contained in the printer with the color matching off.

Color Designation of "Square Solid"

| | |
|---|---|
| Black: | (R) 0, (G) 0, (B) 0 |
| Yellow: | (R) 255, (G) 255, (B) 0 |
| Magenta: | (R) 255, (G) 0, (B) 255 |
| Cyan: | (R) 0, (G) 0, (B) 255 |

Evaluation Criteria

| | |
|---|---|
| E (Excellent): | Less than 30 mm |
| G (Good): | 30 mm to less than 40 mm |
| F (Fair): | 40 mm to less than 50 mm |
| B (Bad): | 50 mm or greater or curled |

Image Density

Print a "square solid" chart having 64 point texts prepared by Microsoft Word 2000 on the recording medium, measure the color of the "square solid" portion of the printed surface by X-Rite 938, and evaluate it according to the following criteria. The printing mode is: "Plain Paper - Standard Fast" by a driver contained in the printer with the color matching off.

Color Designation of "Square Solid"

| | |
|---|---|
| Black: | (R) 0, (G) 0, (B) 0 |
| Yellow: | (R) 255, (G) 255, (B) 0 |
| Magenta: | (R) 255, (G) 0, (B) 255 |
| Cyan: | (R) 0, (G) 0, (B) 255 |

Evaluation Criteria

| | |
|---|---|
| E (Excellent): | Black: 1.3 or greater |
| | Yellow: 0.85 or greater |
| | Magenta: 1.05 or greater |
| | Cyan: 1.1 or greater |
| G (Good): | Black: 1.2 to less than 1.3 |
| | Yellow: 0.8 to less than 0.85 |
| | Magenta: 1.0 to less than 1.05 |
| | Cyan: 1.0 to less than 1.1 |
| F (Fair): | Black: 1.15 to less than 1.2 |
| | Yellow: 0.75 to less than 0.8 |
| | Magenta: 0.95 to less than 1.0 |
| | Cyan: 0.95 to less than 1.0 |
| B (Bad): | Black: less than 1.15 |
| | Yellow: less than 0.75 |
| | Magenta: less than 0.95 |
| | Cyan: less than 0.95 |

Image Saturation

Print the "square solid" chart as in the Image Density, measure the color of the "square solid" portion of the printed surface by X-Rite 938, and evaluate it according to the following criteria. The printing mode is: "Plain Paper - Standard Fast" by a driver contained in the printer with the color matching off.

Calculate the ratio of the measured saturation value to the saturation value (Yellow: 91.34 Magenta: 74.55 Cyan: 62.82) of the standard color (Japan color ver. 2) and evaluate it according to the following criteria.

Evaluation Criteria

| | |
|---|---|
| E (Excellent): | 0.85 or higher |
| G (Good): | 0.80 to less than 0.85 |
| F (Fair): | 0.75 to less than 0.80 |
| B (Bad): | Less than 0.75 |

Preservation Stability

Prepare the process liquid of Preparation Examples 13 to 28 as in image evaluation and leave it in a constant temperature bath at 70 °C for two weeks. Measure the viscosity changing ratio of the process liquid before and after leaving in the constant temperature bath. The viscosity of the process liquid is measured as in the ink viscosity.

| | |
|---|---|
| E (Excellent): | Viscosity change Less than 5 % |
| G (Good): | Viscosity change Less than 10 % |
| F (Fair): | Viscosity change Less than 20 % |
| B (Bad): | Viscosity change 20 % or greater |

The evaluation results of each ink are shown in Table 4 with regard to Examples and Comparative Examples showing the ink preparation Examples of Tables 1 to 3.

Table 4

| | Ink Preparation Examples | Image Density | | Saturation | | Curling | | Discharging stability |
|---|---|---|---|---|---|---|---|---|
| | | MyPaper | HM for MP | MyPaper | HM for MP | MyPaper | HM for MP | |
| Examples | 1 | G | E | G | E | E | E | G |
| | 2 | G | E | G | E | E | E | G |
| | 3 | G | E | G | E | E | E | G |
| | 4 | G | E | G | E | E | E | F |
| | 5 | G | E | G | E | E | E | G |
| | 6 | G | E | G | E | E | E | G |
| | 7 | G | E | G | E | E | E | F |
| | 8 | G | E | G | E | E | E | F |
| | 9 | G | E | G | E | E | E | F |
| | 10 | G | E | G | E | E | E | F |
| | 11 | G | E | G | E | E | E | F |
| | 12 | G | E | G | E | E | E | F |
| | 13 | G | E | G | E | G | G | F |
| | 14 | G | E | G | E | G | G | F |
| | 15 | G | E | G | E | G | G | F |
| Comp | 16 | G | E | G | E | F | B | F |
| | 17 | G | E | G | E | B | B | B |
| | 18 | B | F | B | F | F | B | G |
| | 19 | G | E | G | E | B | B | F |

(continued)

| | Ink Preparation Examples | Image Density | | Saturation | | Curling | | Discharging stability |
|---|---|---|---|---|---|---|---|---|
| | | MyPaper | HM for MP | MyPaper | HM for MP | MyPaper | HM for MP | |
| Comparative | 20 | B | B | B | B | G | G | B |
| | 21 | G | E | G | E | B | B | G |
| | 22 | B | B | B | B | G | G | G |
| | 23 | G | E | G | E | F | B | G |
| | 24 | G | E | G | E | B | B | B |
| | 25 | B | F | B | F | G | B | G |
| | 26 | B | B | B | B | G | G | B |
| Examples | 27 | G | E | G | E | E | E | G |
| | 28 | G | E | G | E | E | E | G |
| | 29 | G | E | G | E | E | E | G |
| | 30 | G | E | G | E | E | E | G |
| | 31 | G | E | G | E | E | E | G |
| | 32 | G | E | G | E | E | E | G |
| | 33 | G | E | G | E | E | E | G |
| | 34 | G | E | G | E | E | E | G |
| | 35 | G | E | G | E | E | E | G |
| | 36 | G | E | G | E | E | E | G |
| | 37 | G | E | G | E | E | E | G |
| | 38 | G | E | G | E | E | E | G |

In the Preparation Examples shown as Examples of the present disclosure, the image density, the saturation, the curling, and the discharging stability are without problems.

On the other hand, the results of the Preparation Examples shown as Comparative Examples are as follows. In the ink having a composition that contains no compound represented by the Chemical Structure 2 as in Preparation Examples 16 and 23, curling worsens particularly for the recording medium such as Hummermil for MP formed by agglomerating pigments on the surface thereof to improve the image quality.

In the ink having a composition that contains the compound represented by the Chemical Structure 1 in an amount of less than 5 % by weight as in Preparation Examples 17 and 24, curling is not sufficiently reduced and in addition the discharging stability also deteriorate. In the ink having a composition that contains the compound represented by the Chemical Structure 1 in an amount of 10 % by weight or more as in Preparation Examples 18 and 25, curling worsens for Hummermil for MP and the image quality also deteriorates.

In the ink that contains the hydrosoluble organic solvent having an equilibrium moisture content of 20 % by weight or less when the temperature and the humidity are 23 °C and 80 % RH in an amount of less than 10 % by weight as in Preparation Example 19, curling worsens. In the ink that contains the hydrosoluble organic solvent having an equilibrium moisture content of 20 % by weight or less when the temperature and the humidity are 23 °C and 80 % RH in an amount of 30 % by weight or more as in Preparation Example 20, the image quality such as the image density and saturation deteriorates.

In the ink that contains the hydrosoluble organic solvent in an amount of less than 40 % by weight in total as in Preparation Example 21, curling worsens. In the ink that contains the hydrosoluble organic solvent in an amount of 50 % by weight or greater in total as in Preparation Examples 22 and 26, the image quality deteriorates.

By the ink for inkjet recording of the present disclosure, images having excellent image density and saturation in particular can be produced on plain paper at high speed without curling and cockling while the discharging stability of the ink from nozzles is good. In addition, the ink can be suitably used for an ink recording material, an inkjet recording

device, and an inkjet recording method.

The inkjet recording device and the inkjet recording method of the present disclosure can be applied to recording employing inkjet recording methods such as printers, facsimile machines, photocopiers, multi-functional machines thereof for inkjet recording.

## Claims

1. An ink for inkjet recording, comprising:

   water;
   a hydrosoluble organic solvent;
   a surface active agent;
   a coloring agent; and
   at least one of a hydrosoluble resin, a resin emulsion, and a resin-coated pigment,
   **characterized in that** a content ratio of the hydrosoluble organic solvent in the ink with respect to the ink as a whole is from 40 % by weight to less than 50 % by weight,
   **characterized in that** the hydrosoluble organic solvent comprises a component A, a component B, and a component C,
   **characterized in that** a content ratio of a component represented by the following Chemical Structure 1 as the component A relative to the ink is from 5 % by weight to less than 10 % by weight;
   **characterized in that** a content ratio of a component represented by the following Chemical Structure 2 as the component B relative to the ink is from 5 % by weight to less than 30 % by weight; and
   **characterized in that** a content ratio of a hydrosoluble organic solvent having an equilibrium moisture content of 20 % by weight or less at 23 °C and 80 % RN as the component C relative to the ink is from 10 % by weight to less than 30 % by weight:

   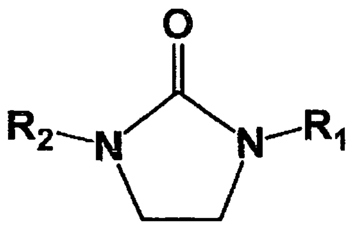

   Chemical Structure 1

   where $R_1$ and $R_2$ independently represent hydrogen atoms or alkyl groups having one to two carbon atoms,

   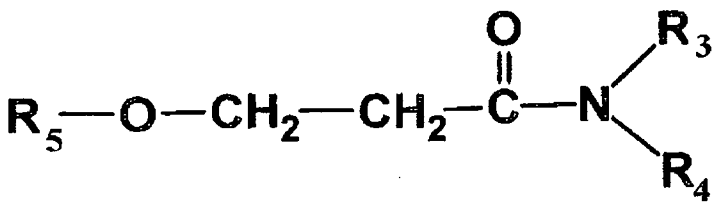

   Chemical Structure 2

   where $R_3$ and $R_4$ independently represent methyl groups and $R_5$ represents an alkyl group having two to five carbon atoms.

2. The ink for inkjet recording according to Claim 1, **characterized in that** the compound represented by the Chemical Structure 2 comprises β-buthoxy-N,N-dimethyl propion amide.

3. The ink for inkjet recording according to Claim 1 or 2, **characterized in that** the hydrosoluble organic solvent having an equilibrium moisture content of 20% by weight or less at 23 °C and 80 % RH comprises at least one of tripropylene glycol monomethyl ether and 2-(2-isopropyloxy ethoxy)ethanol.

4. The ink for inkjet recording according to any one of Claims 1 to 3, **characterized in that** the hydrosoluble organic solvent further comprises one or more compounds selected from the group consisting of glycerin, 1,3-butane diol, and 3-methyl-1,3-butane diol.

5. The ink for inkjet recording according to any one of Claims 1 to 4, **characterized in that** the compound represented by the Chemical Structure 1 comprises 1,3-dimethyl-2-imidazolidione.

6. The ink for inkjet recording according to any one of Claims 1 to 5, **characterized in that** the coloring agent comprises a self-dispersing pigment having a surface modified by a hydrophilic group or a resin-coated pigment.

7. The ink for inkjet recording according to any one of Claims 1 to 6, **characterized by** comprising at least one of cyan ink, magenta ink, yellow ink, and black ink.

8. An inkjet recording method comprising:

   applying a stimulus to the ink for inkjet recording of any one of Claims 1 to 7 to discharge the ink onto a recording medium to form an image thereon.

9. An inkjet recording device comprising:

   an inkjet ejection device that ejects the ink for inkjet recording of any one of Claims 1 to 7 onto a recording medium by applying a stimulus to the ink to form an image on the recording medium.

10. An ink recording material comprising a recording medium having an image formed thereon by ejecting the ink for inkjet recording of any one of Claims 1 to 7 thereonto.

**Patentansprüche**

1. Tinte zur Tintenstrahlaufzeichnung, umfassend:

   Wasser;
   ein wasserlösliches organisches Lösungsmittel;
   ein oberflächenaktives Mittel;
   ein Farbmittel; und
   mindestens eines von einem wasserlöslichen Harz, einer Harzemulsion und einem harzbeschichteten Pigment,
   **dadurch gekennzeichnet, dass** ein Gehaltsverhältnis des wasserlöslichen organischen Lösungsmittels in der Tinte mit Bezug auf die Tinte als ganzer 40 Gew.-% bis weniger als 50 Gew.-% beträgt,
   **dadurch gekennzeichnet, dass** das wasserlösliche organische Lösungsmittel eine Komponente A, eine Komponente B und eine Komponente C umfasst,
   **dadurch gekennzeichnet, dass** ein Gehaltsverhältnis einer Komponente, die durch die folgende chemische Struktur 1 dargestellt ist, als Komponente A mit Bezug auf die Tinte 5 Gew.-% bis weniger als 10 Gew.-% beträgt;
   **dadurch gekennzeichnet, dass** ein Gehaltsverhältnis einer Komponente, die durch die folgende chemische Struktur 2 dargestellt ist, als Komponente B mit Bezug auf die Tinte 5 Gew.-% bis weniger als 30 Gew.-% beträgt; und
   **dadurch gekennzeichnet, dass** ein Gehaltsverhältnis eines wasserlöslichen organischen Lösungsmittels, das einen Äquilibriumfeuchtigkeitsgehalt von 20 Gew.-% oder weniger bei 23 °C und 80 % RF als Komponente C mit Bezug auf die Tinte 10 Gew.-% bis weniger als 30 Gew.-% beträgt:

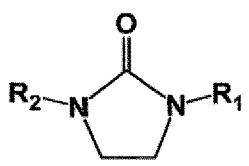

chemische Struktur1

   wobei $R_1$ und $R_2$ unabhängig Wasserstoffatome oder Alkyl darstellen, die ein oder zwei Kohlenstoffatome aufweisen,

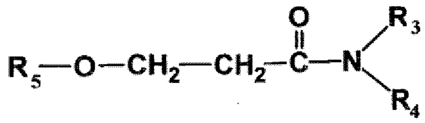

chemische Struktur 2

wobei $R_3$ und $R_4$ unabhängig Methylgruppen darstellen und $R_5$ eine Alkylgruppe darstellt, die zwei bis fünf Kohlenstoffatome aufweist.

2. Tinte zur Tintenstrahlaufzeichnung nach Anspruch 1, **dadurch gekennzeichnet dass** die Verbindung, die durch die chemische Struktur 2 dargestellt ist, β-Butoxy-N,N-dimethylpropionamid umfasst.

3. Tinte zur Tintenstrahlaufzeichnung nach Anspruch 1 oder 2, **dadurch gekennzeichnet, dass** das wasserlösliche organische Lösungsmittel, das einen Äquilibriumfeuchtigkeitsgehalt von 20 Gew.-% oder weniger bei 23 °C und 80 % RF aufweist, mindestens eines von Tripropylenglycolmonomethylether und 2-(2-Isopropyloxyethoxy)ethanol umfasst.

4. Tinte zur Tintenstrahlaufzeichnung nach einem der Ansprüche 1 bis 3, **dadurch gekennzeichnet, dass** das wasserlösliche organische Lösungsmittel ferner eine oder mehrere Verbindungen umfasst ausgewählt aus der Gruppe bestehend aus Glycerin, 1,3-Butandiol und 3-Methyl-1,3-butandiol.

5. Tinte zur Tintenstrahlaufzeichnung nach einem der Ansprüche 1 bis 4, **dadurch gekennzeichnet, dass** die Verbindung, die durch die chemische Struktur 1 dargestellt ist, 1,3-Dimethyl-2-imidazolidion umfasst.

6. Tinte zur Tintenstrahlaufzeichnung nach einem der Ansprüche 1 bis 5, **dadurch gekennzeichnet, dass** das Farbmittel ein selbstdisperierendes Pigment umfasst, das eine Oberfläche aufweist, die durch eine hydrophilen Gruppe oder ein harzbeschichtetes Pigment modifiziert worden ist.

7. Tinte zur Tintenstrahlaufzeichnung nach einem der Ansprüche 1 bis 6, **gekennzeichnet durch** Umfassen mindestens einer von cyanfarbener Tinte, magentafarbener Tinte, gelber Tinte und schwarzer Tinte.

8. Tintenstrahlaufzeichnungsverfahren umfassend:

   das Aufbringen einer Anregung auf die Tinte zur Tintenstrahlaufzeichnung nach einem der Ansprüche 1 bis 7, zum Abgeben der Tinte auf ein Aufzeichnungsmedium, um ein Bild darauf zu erzeugen.

9. Tintenstrahlenaufzeichnungsvorrichtung umfassend:

   eine Tintenstrahlausstoßvorrichtung, die Tinte zum Tintenstrahlaufzeichnen nach einem der Ansprüche 1 bis 7 auf ein Aufzeichnungsmedium durch Aufbringen einer Anregung auf die Tinte zum Erzeugen eines Bilds auf dem Aufzeichnungsmedium ausstößt.

10. Tintenaufzeichnungsmaterial umfassend ein Aufzeichnungsmedium, auf dem ein Bild durch Ausstoßen der Tinte zum Tintestrahlaufzeichnen nach einem der Ansprüche 1 bis 7 darauf erzeugt worden ist.

## Revendications

1. Encre pour enregistrement par jet d'encre, comprenant:

   de l'eau;
   un solvant organique hydrosoluble;
   un agent tensioactif;
   un agent colorant; et
   au moins une résine hydrosoluble, une émulsion de résine, et un pigment enrobé de résine,
   **caractérisée en ce qu'**un rapport des contenus du solvant organique hydrosoluble dans l'encre par rapport à l'encre dans sa globalité est de 40 % en poids à moins de 50 % en poids,
   **caractérisée en ce que** le solvant organique hydrosoluble comprend un composant A, un composant B, et un

composant C,
**caractérisée en ce qu'**un rapport des contenus d'un composant représenté par la structure chimique suivante 1 comme composant A par rapport à l'encre est de 5 % en poids à moins de 10 % en poids;
**caractérisée en ce qu'**un rapport des contenus d'un composant représenté par la structure chimique suivante 2 comme composant B par rapport à l'encre est de 5 % en poids à moins de 30 % en poids; et
**caractérisée en ce qu'**un rapport des contenus d'un solvant organique hydrosoluble ayant une teneur en humidité à l'équilibre de 20 % en poids ou moins à 23°C et 80 % d'HR comme composant C par rapport à l'encre est de 10 % en poids à moins de 30 % en poids:

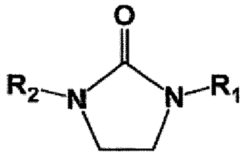

Structure chimique 1

où $R_1$ et $R_2$ représentent indépendamment des atomes d'hydrogène ou des groupes alkyle ayant un à deux atomes de carbone,

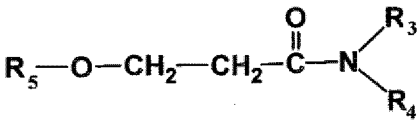

Structure chimique 2

où $R_3$ et $R_4$ représentent indépendamment des groupes méthyle et $R_5$ représente un groupe alkyle ayant deux à cinq atomes de carbone.

2. Encre pour enregistrement par jet d'encre selon la revendication 1, **caractérisée en ce que** le composé représenté par la structure chimique 2 comprend du β-butoxy-N,N-diméthyl propionamide.

3. Encre pour enregistrement par jet d'encre selon la revendication 1 ou 2, **caractérisée en ce que** le solvant organique hydrosoluble ayant une teneur en humidité à l'équilibre de 20 % en poids ou moins à 23°C et 80 % d'HR comprend au moins l'un parmi l'éther monométhylique du tripropylène glycol et le 2-(2-isopropyloxy éthoxy)éthanol.

4. Encre pour enregistrement par jet d'encre selon l'une quelconque des revendications 1 à 3, **caractérisée en ce que** le solvant organique hydrosoluble comprend en outre un ou plusieurs composés sélectionnés dans le groupe constitué de la glycérine, du 1,3-butane diol, et du 3-méthyl-1,3-butane diol.

5. Encre pour enregistrement par jet d'encre selon l'une quelconque des revendications 1 à 4, **caractérisée en ce que** le composé représenté par la structure chimique 1 comprend de la 1,3-diméthyl-2-imidazolidione.

6. Encre pour enregistrement par jet d'encre selon l'une quelconque des revendications 1 à 5, **caractérisée en ce que** l'agent colorant comprend un pigment auto-dispersant ayant une surface modifiée par un groupe hydrophile ou un pigment enrobé de résine.

7. Encre pour enregistrement par jet d'encre selon l'une quelconque des revendications 1 à 6, **caractérisée en ce qu'**elle comprend au moins l'une parmi une encre cyan, une encre magenta, une encre jaune, et une encre noire.

8. Procédé d'enregistrement par jet d'encre comprenant:

   l'application d'un stimulus à l'encre pour l'enregistrement par jet d'encre selon l'une quelconque des revendications 1 à 7 pour décharger l'encre sur un milieu d'enregistrement afin de former une image dessus.

9. Dispositif d'enregistrement par jet d'encre comprenant:

   un dispositif d'éjection d'un jet d'encre qui éjecte l'encre pour l'enregistrement par jet d'encre selon l'une quelconque des revendications 1 à 7 sur un milieu d'enregistrement par l'application d'un stimulus à l'encre afin de

former une image sur le milieu d'enregistrement.

**10.** Matériau d'enregistrement par encre comprenant un milieu d'enregistrement ayant une image formée dessus par l'éjection d'encre pour l'enregistrement par jet d'encre selon l'une quelconque des revendications 1 à 7 dessus.

FIG. 1

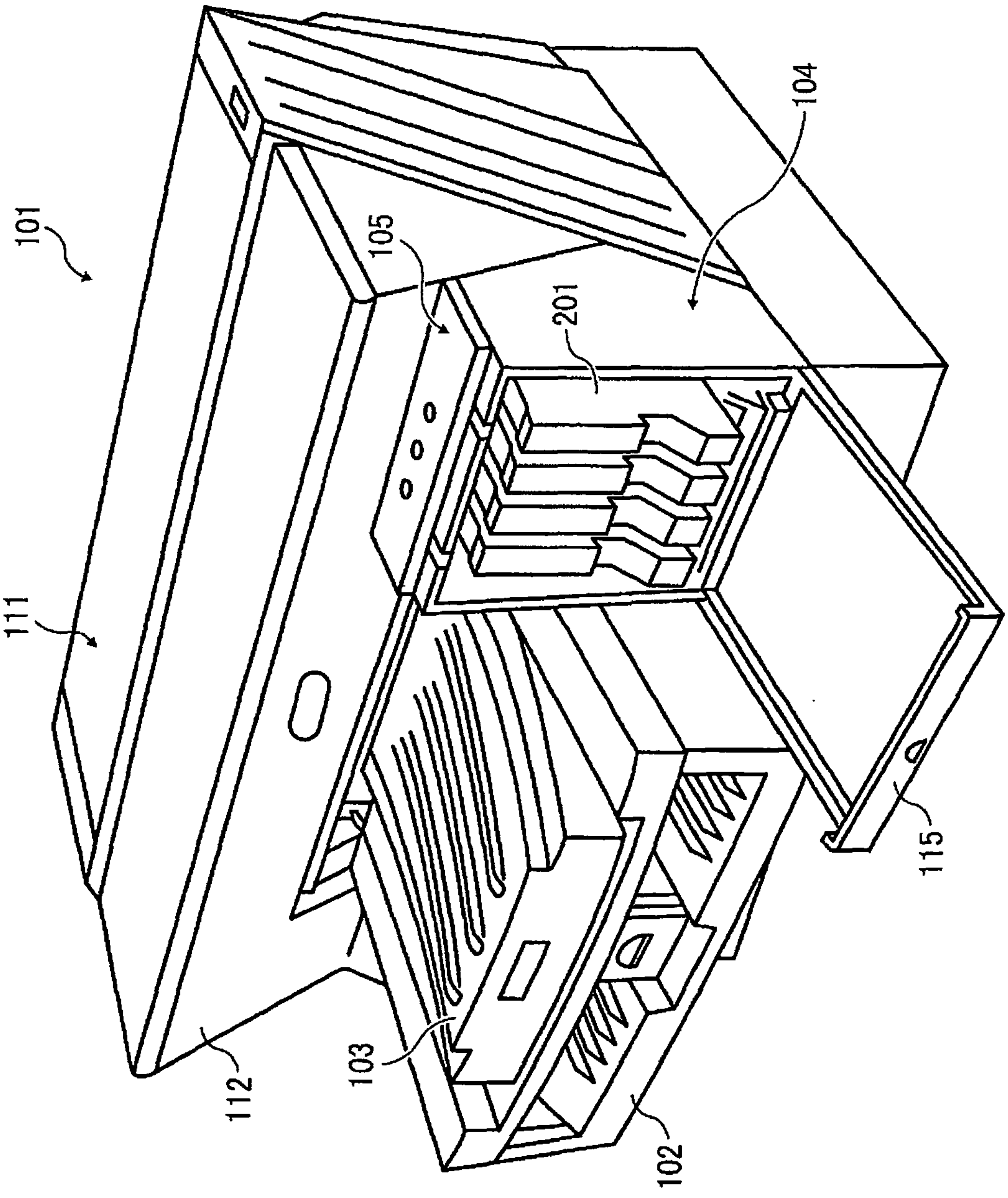

FIG. 2

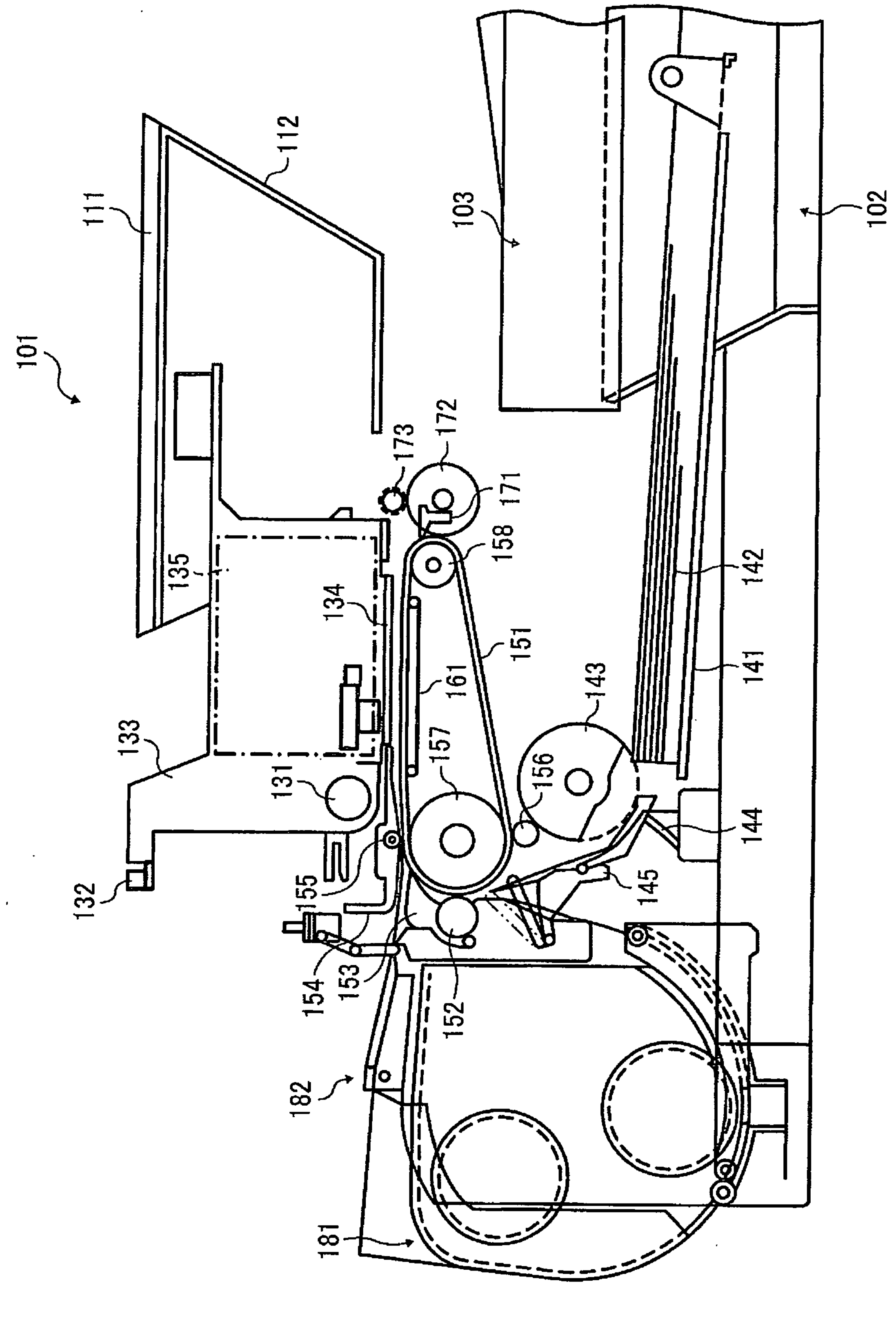
101
111
112
103
102
173
172
171
158
135
134
151
142
141
143
161
157
156
133
131
144
145
155
132
154
153
152
182
181

FIG. 3

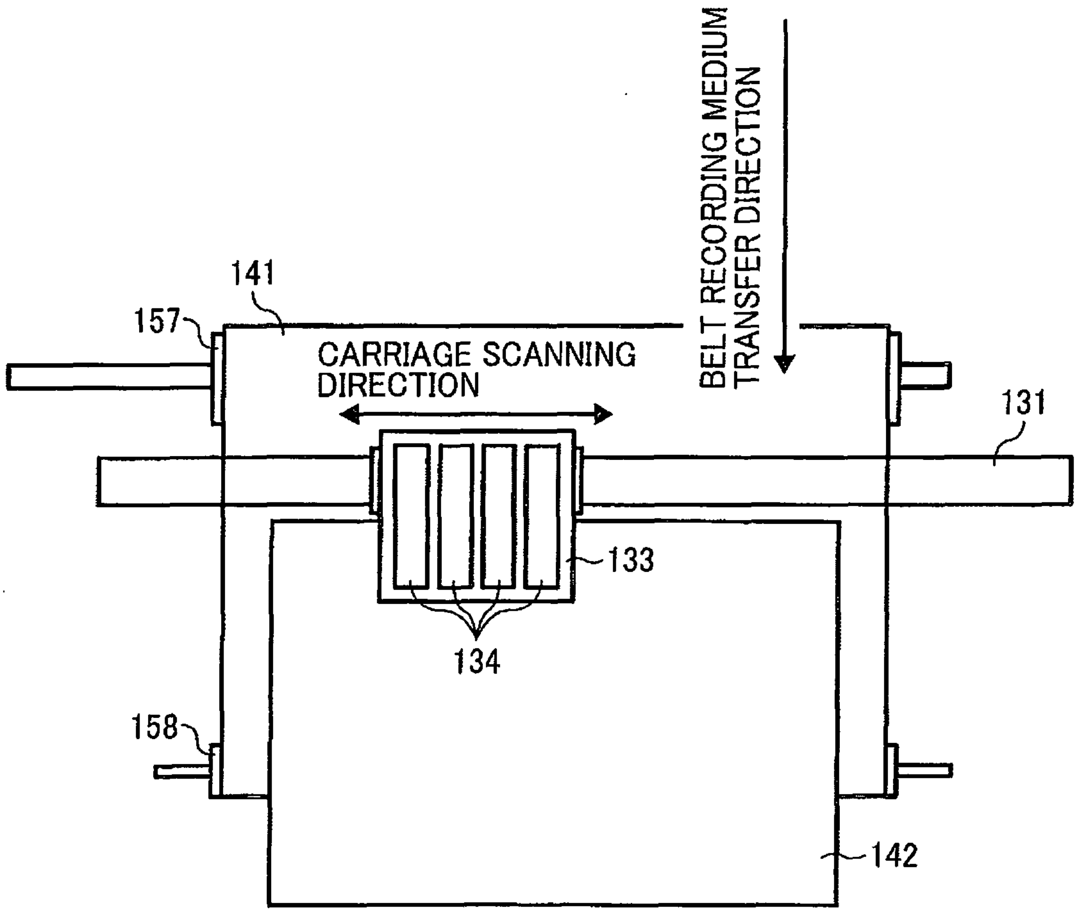
BELT RECORDING MEDIUM
TRANSFER DIRECTION
141
157
CARRIAGE SCANNING
DIRECTION
131
133
134
158
142

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H04332775 B
- JP H04332775 A
- JP H06157955 A
- JP H06240189 A
- JP H09176538 A
- JP H10130550 A
- JP 2005297549 A
- JP 2006321876 A
- JP 2007091905 A
- JP H251734 A
- JP 61059911 A
- JP H671882 A